# EUROPÄISCHE PATENTSCHRIFT

(11) **EP 2 626 676 B1**
(45) Veröffentlichungstag und Bekanntmachung des Hinweises auf die Patenterteilung: **20.04.2016**
(21) Anmeldenummer: 12154564.4
(22) Anmeldetag: 08.02.2012
(51) Int. Cl.: G01F 23/284, G01S 7/40

(54) **Vorrichtung und Verfahren zum Korrigieren eines Offsets**
Apparatus and method for correcting an offset
Dispositif et procédé de correction d'un décalage

(43) Veröffentlichungstag der Anmeldung: 14.08.2013
(73) Patentinhaber: VEGA Grieshaber KG, 77709 Wolfach (DE)
(72) Erfinder: Griessbaum, Karl, 77796 Mühlenbach (DE); Haas, Jürgen, 77709 Oberwolfach (DE)
(74) Vertreter: Kopf, Korbinian Paul

(56) Entgegenhaltungen:
- EP-A1- 1 635 192
- EP-A1- 1 748 303
- EP-A1- 2 327 966
- DE-A1- 10 044 769

## Beschreibung

### Technisches Gebiet

Die vorliegende Erfindung betrifft die Messtechnik, beispielsweise die Messung von Füllständen in Behältern. Insbesondere betrifft die vorliegende Erfindung eine Offsetbestimmvorrichtung, eine Messvorrichtung, ein Verfahren zum Bestimmen eines Offsets, ein computerlesbares Speichermedium und ein Computerprogrammprodukt.

### Hintergrund der Erfindung

Bei bestimmten Anwendungen von Zeitmessverfahren kann es vorkommen, dass ein Bereich einer Echokurve, der für die Bestimmung des Offsets der Echokurve gewählt ist, nicht mehr frei von Störungen ist, wie beispielsweise frei von Rauschen. In diesem Fall wird der Wert des Offsets falsch bestimmt und weicht vom realen Offsetwert ab. Eine Abweichung von diesem tatsächlich vorhandenen Offsetwert kann dazu führen, dass es bei der Bestimmung einer Bezugslinie oder eines Normal-Wertes zu Ungenauigkeiten oder Fehlern kommen kann. Diese Ungenauigkeiten können wiederum beim Bestimmen eines auf diese Bezugslinie bezogenen Messwerts zu Ungenauigkeiten führen.

In der Druckschrift DE 100 44 769 A1 wird ein Verfahren zur Entfernungsmessung mittels eines Signals beschrieben, wobei von einer Empfangseinrichtung ein Echosignal empfangen wird, dem ein erster Referenzimpuls überlagert ist und wobei das Echosignal mit einem zweiten Referenzsignal, das einen zweiten Referenzimpuls aufweist, zur Ermittlung einer Signallaufzeit verglichen wird.

Die Druckschrift EP 2 327 966 A1 betrifft ein zeitgedehntes Hochfrequenzsignal bei dessen Abtastung eine Abtastfrequenz gewechselt wird, um zu verhindern, dass ein Störer das Nutzband verfälscht oder dominiert.

Die Druckschrift EP 1 635 192 A1 betrifft ein Rauschsignal, welches durch das Umschalten zwischen mehreren Antennen entsteht, und welches durch das Subtrahieren eines Korrekturwertes in der Fouriertransformierten eliminiert werden kann.

Die Druckschrift EP 1 748 303 A1 betrifft eine automatische Verstärkungssteuerung für Mehrkanalempfänger, wobei die Rauschleistung in mehreren Frequenzkanälen bestimmt wird, um Parameter für ein mathematisches Modell einer System-Frequenz-Antwort über ein Spektrum abzuschätzen und um die Verstärkungskorrektur als Funktion der Frequenz zu bestimmen.

Oftmals wird bei Messverfahren der Füllstandmessung eine Referenzkurve genutzt, welche zuvor ermittelt und abgelegt werden muss, um eine neu eingelesene Kurve korrigieren zu können. Für die Ermittlung dieser Referenzkurve mag ein leerer Behälter nötig sein, der zur Nachführung der Referenzkurve von Zeit zu Zeit künstlich geleert werden muss.

Entsprechend mag es eine Motivation für die vorliegende Erfindung sein, ein effizienteres Messen von Signallaufzeiten zu ermöglichen.

### Zusammenfassung der vorliegenden Erfindung

Dementsprechend mag eine Messvorrichtung, ein Verfahren zum Bestimmen eines Offsets, ein computerlesbares Speichermedium und ein Computerprogrammprodukt bereitgestellt werden.

Gemäß einem Aspekt der vorliegenden Erfindung mag ein Gegenstand gemäß der unabhängigen Patentansprüche beschrieben werden. Weitere exemplarische Ausführungsbeispiele der vorliegenden Erfindung mögen sich durch die von den abhängigen Patentansprüchen beschriebenen Gegenstände ergeben.

Eine Offsetbestimmvorrichtung mag auch zum Korrigieren eines Offsets geeignet sein.

Gemäß einem Aspekt der vorliegenden Erfindung wird eine Messvorrichtung, ein Messsystem oder ein Messaufbau beschrieben, der eine Sende-Empfangseinrichtung und eine Offsetbestimmvorrichtung zur Bestimmung eines Amplitudenoffsets aufweist, beschrieben, wobei die Offsetbestimmvorrichtung eine Abtast-Empfangseinrichtung, eine Steuereinrichtung und eine Offsetbereitstelleinrichtung aufweisen mag. In dieser Messvorrichtung mag die Steuereinrichtung der Offsetbestimmvorrichtung mit der Sendeeinrichtung verbunden sein, so dass beispielsweise von der Offsetbestimmvorrichtung auf die Sendeeinrichtung eingewirkt werden kann. Die Sendeeinrichtung mag in einem Beispiel in Kombination mit einer Vielzahl anderer Komponenten einen Sensor bilden. Insbesondere kann ein Sensor eine Sendeeinrichtung aufweisen. Eine Messvorrichtung kann zumindest eine Sendeeinrichtung und eine Offsetbestimmvorrichtung enthalten. Die Offsetbestimmvorrichtung kann aber auch als externe Einrichtung zu der Messvorrichtung betrieben werden.

Die Abtast-Empfangseinrichtung kann zum Empfangen von zeitgedehnten Abtastwerten eines Reflexionssignals eines Sendesignals eingerichtet sein. In diesem Zusammenhang können unter den zeitgedehnten Abtastwerten auch Werte einer analogen Echokurve verstanden werden, welche aus Abtastwerten einer Echokurve rekonstruiert worden sind. Das Reflexionssignal kann aus mehreren einzelnen Empfangssignalen zusammengesetzt werden. Das Sendesignal kann periodisch mit einer ersten Periodendauer von einer Sendeeinrichtung generiert und ausgesendet oder emittiert werden. Die Sendeeinrichtung mag eine Komponente sein, die extern zur Offsetbestimmvorrichtung betrieben wird. Zur Steuerung dieser externen Komponente mag die Offsetbestimmvorrichtung eine externe Schnittstelle aufweisen, über die Signale für und/oder von der Sendeeinrichtung bereitgestellt werden und die der Steuerung der Sendeeinrichtung dienen mögen.

Die Steuereinrichtung mag zum Steuern der Sendeeinrichtung eingerichtet sein. Für diese Steuerung oder Regelung mag die Steuereinrichtung ferner derart eingerichtet sein, dass sie einen vorgebbaren Messzeitbereich oder bekannten Messzeitbereich der zeitgedehnten Abtastwerte des Reflexionssignals bestimmen kann. Das Bestimmen des Messzeitbereichs kann auch ein Erkennen des Messzeitbereichs umfassen. Die Steuereinrichtung mag ferner eingerichtet sein außerhalb des Messzeitbereichs ein Abschaltsignal bereitzustellen. Dieses Abschaltsignal kann die Sendeeinrichtung zumindest teilweise deaktivieren, um einen vorgebbaren Ruhezeitbereich innerhalb der zeitgedehnten Abtastwerte des Reflexionssignals zu erzeugen. Der Messbereich oder Messzeitbereich kann entweder ein Zeitbereich einer Echokurve oder ein Ortsbereich einer Echokurve sein, wobei der Zeitbereich und der Ortsbereich ineinander transformiert werden können. Ein Bereich mag daher beispielsweise ein zeitliches Intervall oder ein örtliches Intervall sein. Bei periodischen Signalen können sich entsprechende Intervalle periodisch wiederholen.

Die Offsetbereitstelleinrichtung mag eingerichtet sein, durch das Auswerten zumindest eines Abtastwertes der zeitgedehnten Abtastwerte, der innerhalb des Ruhezeitbereichs oder außerhalb des Messzeitbereichs ermittelt worden ist, einen Wert eines Offsets, insbesondere den Wert eines Amplitudenoffsets, oder einer Abweichung der zeitgedehnten Abtastwerte des Reflexionssignals von einem Normal-Wert, von einem Nullwert oder beispielsweise von einem NullAmplitudenwert zu bestimmen. Der Normal-Wert mag in einem Beispiel ein Erwartungs-Amplitudenwert oder Soll-Wert des Empfängerausgangssignals sein, bei im Wesentlichen vollständiger Abwesenheit jedweden durch das Sendesignal hervorgerufenen Empfangssignals, das mag bedeuten in einem signalfreien Raum. Der Normal-Wert mag in einem anderen Beispiel ein Erwartungs-Amplitudenwert sein. Der Normal-Wert mag somit im Wesentlichen nur ein theoretisch zu erwartender Wert sein, der keine Empfangssignale berücksichtigt, die von Sendequellen hervorgerufen werden, welche unter normalen Bedingungen vorhandenen sind. Empfangssignale von Störungen in einer Sende-Empfangseinrichtung selbst und somit Störungen, die im Wesentlichen nicht abgeschaltet oder abgeschirmt werden können, sind in solch einem theoretischen Wert nicht enthalten.

Den Offset, der aus der Abweichung von dem Normal-Wert ermittelt wurde, kann die Offsetbestimmvorrichtung an einem Ausgang der in ihr enthaltenen Offsetbereitstelleinrichtung bereitstellen. Das an diesem Ausgang der Offsetbereitstelleinrichtung bereitgestellte Signal, welches im Wesentlichen den Offset selbst oder einen Korrekturwert aufweist, kann über den Ausgang beispielsweise an ein Stellglied weitergegeben werden und/oder an ein Digitalpotentiometer einer Offsetregeleinrichtung. Beispielsweise kann ein Ausgang der Offsetbereitstelleinrichtung mit einem digitalen Potentiometer verbunden sein und eine Offsetregelschleife bilden. Ein anderer Ausgang der Offsetbereitstelleinrichtung mag zusätzlich oder alternativ mit einer digitalen Signalverarbeitungseinrichtung verbunden sein.

Gemäß noch einem weiteren Aspekt der vorliegenden Erfindung mag ein Verfahren zum Bestimmen eines Offsets oder eines Amplitudenoffsets beschrieben werden. Dieser Offset, welcher mittels des Verfahrens bestimmt werden mag, kann eine Abweichung eines Abtastwerts oder einer Abtastamplitude von einem Normal-Wert sein.

Das Verfahren mag das Empfangen von zeitgedehnten Abtastwerten eines Reflexionssignals eines Sendesignals aufweisen, wobei das Sendesignal und somit auch das Reflexionssignal oder Empfangssignal periodisch mit einer ersten Periodendauer von einer Sende-Empfangseinrichtung ausgesendet bzw. empfangen wird. In dem Verfahren mag weiter vorgesehen sein, dass außerhalb eines vorgebbar festgelegten Messzeitbereichs der zeitgedehnten Abtastwerte des Reflexionssignals ein Abschaltsignal bereitgestellt werden kann, welches das Aussenden des Sendesignals zumindest zeitweise deaktivieren kann. Durch das Deaktivieren des Aussendens des Sendesignals mag ein vorgebbarer Ruhezeitbereich innerhalb der zeitgedehnten Abtastwerte des Reflexionssignals erzeugt werden. Dieser Ruhebereich mag zusammen mit den Abtastwerten des Messbereichs ein zusammengesetztes Reflexionssignal ergeben, dessen Periodendauer das Echosignal und das Ruhesignal umfasst. Der Messbereich und der Ruhebereich können virtuelle Grenzen aufweisen, an denen sie sich aneinander reihen, so dass sich entlang einer Zeitachse oder einer Ortsachse einer Echokurve der Messbereich und der Ruhebereich periodisch abwechseln. Die Grenzen können an Stellen liegen, die einem geradzahligen Vielfachen der ersten Periodendauer entsprechen. Sie können aber auch an beliebig anderen Stellen liegen. In einem Beispiel mag die Periodendauer mit der sich der Messbereich und der Ruhebereich abwechseln einer Frequenz des Abschaltsignals entsprechen.

Das Verfahren zum Bestimmen eines Offsetwerts mag weiter das Bestimmen eines Wertes des Offsets der zeitgedehnten Abtastwerte des Reflexionssignals von einem Normal-Wert aufweisen. Zum Bestimmen des Offsets mag zumindest ein Abtastwert ermittelt werden, der innerhalb des von der Offsetbestimmvorrichtung erzeugten Ruhebereichs liegt. Es mag eine Randbedingung angelegt werden, die eigentlich zu dem Normal-Wert führen müsste. Durch die tatsächliche Ermittlung des Reflexionswertes während die Konditionen der Randbedingung vorherrschen lässt sich die Abweichung der gemessenen Echokurve von der zu erwartenden Echokurve ermitteln.

Ferner mag als eine Ausgabe des Verfahrens das Bereitstellen des Wertes des ermittelten Offsets vorgesehen sein.

Gemäß einem weiteren Aspekt der vorliegenden Erfindung mag ein computerlesbares Speichermedium angegeben werden, welches einen Programmcode aufweist, der, wenn er von einem Prozessor ausgeführt wird, das Verfahren zum Bestimmen eines Offsets ausführt.

Gemäß noch einem anderen Aspekt der vorliegenden Erfindung mag ein Computerprogrammprodukt angegeben sein, welches, wenn es auf einem Prozessor ausgeführt wird, den Prozessor anweisen kann, das Verfahren zum Bestimmen des Offsets auszuführen.

Eine Offsetbestimmvorrichtung mag Reflexionssignale oder Empfangssignale empfangen können, welche in einer beliebigen Form bereitgestellt werden. Ursprünglich mag das Reflexionssignal von einer Sendeeinrichtung erzeugt worden sein, die ein Sendesignal aussendet. Beispielsweise mag es sich bei der Sendeeinrichtung um einen Sender oder um einen Transmitter handeln, welcher ein Impulssignal mit einer vorgebbaren ersten Periodendauer aussendet. Das Impulssignal kann ein Burst mit fester oder variabler Burstfrequenz und einer Wiederholfrequenz mit einer vorgebbaren ersten Periodendauer sein. Das Impulssignal kann in einem anderen Beispiel ein Monopuls mit einer Wiederholfrequenz mit einer vorgebbaren ersten Periodendauer sein. Die Offsetbestimmvorrichtung kann das Empfangssignal mittels einer Empfangseinrichtung, beispielsweise einer Antenne empfangen. Die Empfangseinrichtung kann ein Teil einer Sende-Empfangseinrichtung sein. Die Empfangseinrichtung kann auch die Abtast-Empfangseinrichtung aufweisen. Durch eine nachgeschaltete Auswertung, die beispielsweise durch eine Elektronik realisiert sein kann, mag sich das von der Empfangseinrichtung empfangene Reflexionssignal hinsichtlich einzelner Reflektoren analysieren lassen.

Da das Sendesignal mit einer ersten Periodendauer ausgesendet wird, mag das Reflexionssignal im Wesentlichen dieselbe erste Periodendauer aufweisen. Die zeitgedehnten Abtastwerte mögen durch eine Signalaufbereitung des Reflexionssignals aus einer Vielzahl von periodisch wiederholten Empfangssignalen generiert werden. Die Anzahl der periodischen Signale, die für die Generierung der zeitgedehnten Abtastwerte des Reflexionssignals genutzt wird, mag einen Zeitdehnungsfaktor bestimmen, der zu einer gedehnten Darstellung des Reflexionssignals führen mag.

Die zeitgedehnten Abtastwerte mögen durch sequentielles Abtasten (sequential sampling) eines periodischen Signals mit einer zweiten Periodendauer entstehen. Beispielsweise mag das Empfangssignal ein solches periodisches Signal sein, das abgetastet wird. Das sequentielle Abtasten mag im Wesentlichen nicht zur Digitalisierung sondern zur Zeitdehnung genutzt werden. Daher kann in einem Beispiel aus den Abtastwerten eine zeitgedehnte Echokurve generiert werden.

Die zeitgedehnte Echokurve der Reflexionssignale weist im Wesentlichen den Verlauf der periodisch wiederholten tatsächlich empfangenen Echokurve auf. Allerdings kann durch die Zeitdehnung eine Vergrößerung des Zeitbereiches erreicht werden, wodurch eine andere Skalierung der Beziehung zwischen der Zeit und der Entfernung möglich wird. Das zeitgedehnte Reflexionssignal kann als analoge Kurve bereitgestellt werden. Nach einer Digitalisierung kann jedoch auch ein Verlauf von diskreten Werten dieser zeitgedehnten analogen Reflexionskurve erzeugt werden, wodurch beispielsweise eine digitale Signalverarbeitung der zeitgedehnten Abtastwerte des Reflexionssignals ermöglicht werden mag. Die zeitgedehnte analoge Kurve kann mit einer dritten Periodendauer abgetastet werden. Diese Abtastung kann zu den im Wesentlichen selben oder zu verschobenen Stützstellen führen, aus denen die analoge zeitgedehnte Kurve erzeugt wurde. Durch das Verwenden eines Signals mit einer dritten Periodendauer können feiner oder gröber aufgelöste Stützstellen als mit der zweiten Periodendauer entstehen.

In einem anderen Beispiel kann der Schritt der Rekonstruktion einer analogen Echokurve übersprungen werden und die durch die sequentielle Abtastung bereits vorhandenen Stützwerte, die sich im Abstand der zweiten Periodendauer befinden, können als Ausgangswerte der Digitalisierung genutzt werden.

In noch einem anderen Beispiel kann die dritte Periodendauer den gleichen Wert wie die zweite Periodendauer aufweisen.

Die zeitgedehnten Abtastwerte des Reflexionssignals mögen Stützwerte eines Kurvenverlaufs darstellen, die im Wesentlichen den diskreten Verlauf des Reflexionssignals widerspiegeln und die Stützwerte mögen einen zeitlichen Abstand eines Abtastsignäls aufweisen. Dieser zeitliche Abstand kann beispielsweise eine zweite Periodendauer betragen. Die zweite Periodendauer mag größer als die erste Periodendauer sein, wodurch eine entsprechend hohe Anzahl an Wiederholungen der Abtastvorgänge die periodisch wiederholte Empfangskurve in einen gedehnten Zeitmaßstab abbildet. Je geringer der zeitliche Unterschied der Periodendauern sein mag, desto feiner mag die zeitliche und/oder örtliche Auflösung der zeitgedehnten abgetasteten Echokurve sein oder desto näher mögen die Stützwerte nebeneinander liegen. Da das Sendesignal im Wesentlichen periodisch erzeugt wird, mag ein periodisch verlaufendes Reflexionssignal erzeugt werden.

Um nun eine Offsetbestimmung zu ermöglichen, mag die beschriebene Offsetbestimmvorrichtung vorsehen, ein Signal zu erzeugen, welches es ermöglicht, den Sender für eine vorgebbare Zeitdauer auszuschalten. Das Ausschalten des Senders oder der Sendeeinrichtung mag das Sendesignal abschalten, wobei das Sendesignal die Ursache für die Reflexionen darstellt. Durch das Abschalten der Signalquelle klingen vorhandene Reflexionen ab und es sind nach einer bestimmten Wartezeit im Wesentlichen keine Reflexionen oder Reflexionssignale mehr vorhanden, die empfangen werden könnten. Wird die Offsetbestimmvorrichtung in einem Füllstandmessgerät genutzt, so mag das Abschalten der Sendeeinrichtung dazu führen, dass das Innere eines Behälters im Wesentlichen reflexionsfrei ist. Durch das Abschalten des Sendesignals mag somit von der Offsetbestimmvorrichtung ein vorgebbarer oder definierter Ruhebereich in der zeitgedehnten analogen Reflexionskurve und somit auch in einer entsprechenden abgetasteten zeitgedehnten Echokurve erzeugt werden. In der tatsächlich empfangenen Reflexionskurve mag das Abschalten so in Erscheinung treten, dass für die Abschaltdauer das periodische Signal der Reflexionen unterbrochen werden mag. In anderen Worten mag sich das gemessene Reflexionssignal auf das tatsächlich gemessene Reflexionssignal einschwingen (Steady State) welches dem Ruhe-Wert in der tatsächlichen Messumgebung entspricht. Dieses eingeschwungene tatsächliche Reflexionssignal, welches nach dem Abschalten des Sendesignals vorliegt, mag von dem erwarteten Normal-Wert oder von dem Soll-Normal-Wert trotz des Abschaltens des Sendesignals um den Offset verschoben sein. In anderen Worten mögen die Amplitudenwerte des Reflexionssignals konstant oder linear um den Offsetwert verschoben sein. Somit mag beim Abschalten einer Sendeeinrichtung ein bestimmter Empfangswert, ein Normal-Wert oder ein Soll-Wert erwartet werden. Dieser erwartete Normal-Wert kann jedoch womöglich in der tatsächlichen Umgebung trotz vorliegen der Randbedingungen, die zu einem solchen Normal-Wert führen müssten, nicht ermittelt werden, da möglicherweise Störungen das tatsächlich gemessene Reflexionssignal von dem erwarteten Normal-Wert abweichen lassen. Geht man jedoch von im Wesentlichen gleichförmigen Überlagerungen dieser Störungen auf Empfangssignale aus, kann man auch davon ausgehen, dass die tatsächlich empfangenen Reflexionssignale während die Sendeeinrichtung eingeschaltet ist auch von den zu erwartenden störungsfreien Reflexionssignalen abweichen.

Im Zusammenhang mit den erzeugten Reflexionssignalen und insbesondere mit den daraus erzeugten Reflexionskurven oder Echokurven mag "periodisch" bedeuten, dass regelmäßige Echokurven von den periodisch ausgesandten Sendesignalen erzeugt werden. Die periodisch ausgesandten Sendesignale können selbst wieder eine gewisse Periodizität aufweisen. Der Verlauf der Echokurven mag im Wesentlichen von den physikalischen Gegebenheiten der Signalausbreitstrecke und von der Entfernung eines Reflektors von der Sendeeinrichtung abhängen. In anderen Worten mag das bedeuten, dass, beispielsweise bei einem Einsatz der Offsetbestimmvorrichtung zur Füllstandmessung in einem Behälter, der Verlauf der periodischen Echokurve von Objekten oder Einbauten in dem Behälter und von dem Füllstand eines Füllgutes (filling good) abhängen mag. Solche Einbauten können beispielsweise Rührwerke oder Leitern sein, die in einem Behälter installiert sind. Reflexionen von Objekten machen sich als Erhöhungen der Amplitude der Echokurve oder des über der Zeit aufgetragenen Reflexionssignals bemerkbar. Das Füllgut mag in diesem Zusammenhang diejenige Materie bedeuten, deren Füllhöhe in einem Behälter bestimmt werden soll. Dabei kann es sich um ein Fluid, also ein Gas oder eine Flüssigkeit, einen Feststoff oder auch um ein Schüttgut (bulk solid) handeln.

Der Begriff "periodisches Signal" mag bedeuten, dass in periodischen Abständen von dem Reflexionssignal ein Messbereich erfasst wird, in welchem eine innerhalb eines Füllgutbehälters erzeugte Reflexionskurve ausgewertet wird, und ein Ruhebereich auftritt, der erzeugt wurde, indem die Sendeeinrichtung abgeschaltet worden ist und das Signal trotz abgeschaltetem Sender aufgezeichnet wird. Es mag sich also eine Grenze zwischen einem Bereich der Echokurve ergeben, in dem Reflexionssignale erwartet werden und ausgewertet werden sollen, und einem Bereich, in dem das Ruheverhalten einer Messvorrichtung mittels der Offsetbestimmvorrichtung ermittelt werden soll.

Während der Ruhephase, also während der Zeit während der das Sendesignal blockiert oder nicht erzeugt wird, sollen im Wesentlichen die Einflüsse, die von den Reflexionen eines ausgesendeten Signals erzeugt werden, ausgeschaltet werden, um den Einfluss des Empfängers auf das Empfangssignal zu bestimmen. Eine Kurve von zeitgedehnten Abtastwerten des Reflexionssignals mag eine Vielzahl von Stützwerten aufweisen. Diese Vielzahl von Stützwerten kann als eine Menge von Stützwerten betrachtet werden. In dieser Menge von Stützwerten lässt sich der Ruhebereich als eine Teilgruppe oder eine Untergruppe von zusammenhängenden Stützwerten definieren, die außerhalb des Bereichs liegen, in dem normalerweise Reflexionssignale vorhanden sind Die Teilgruppe der Stützwerte, die in den Messbereich fallen, sollen eine andere disjunkte Teilgruppe der Stützwerte bilden.

Eine gemessene Echokurve oder resultierende Echokurve kann sich aus der Überlagerung der Einflüsse von Reflexionen, also der erwarteten Echokurve, und den Störeinflüssen zusammensetzen. Sind die Störeinflüsse bekannt, insbesondere die Störeinflüsse eines Empfängers, kann aus der gemessenen Echokurve die störbereinigte Echokurve oder im Wesentlichen die erwartete Echokurve ermittelt werden. Da eine Abtast-Empfangseinrichtung der Offsetbestimmvorrichtung auch während der Ruhezeiten aktiv sein mag, können die Einflüsse der Empfangseinrichtung, welche einen Beitrag zu einer Abweichung der Echokurve von einem vorgegebenen Sollruhewert, Normal-Wert oder einer Nullamplitude während der Messphase ergeben, ohne den Einfluss der Reflexionen ermittelt werden. Durch den Einfluss der Störsignale des Empfängers kann die tatsächlich ermittelte Echokurve gegenüber der erwarteten Echokurve verschoben sein. Der Ruhebereich mag auch als Ruhezeit oder Ruhephase bezeichnet werden.

Ein Offset, insbesondere ein Amplitudenoffset, mag ein im Wesentlichen über einen Zeitabschnitt oder über einen Ortsabschnitt konstanter oder fester Wert sein, welcher sämtliche Amplituden eines Empfangssignals von einem Ruhewert linear verschiebt, wodurch ein Fehler oder eine Abweichung der erfassten Reflexionskurve oder Echokurve von der zu erwartenden Echokurve erzeugt wird. Die zu erwartende Echokurve würde gemessen werden, wenn das Empfangssignal frei von Störungen wäre. Diese ideale Echokurve soll durch die Offset-Eliminierung angenähert werden. Da die Amplitudenwerte eines Reflexionssignals oftmals in einem kartesischen Koordinatensystem mit der Abszisse als Zeitachse oder Ortsachse dargestellt werden können, mag der Offset im Wesentlichen eine konstante Verschiebung entlang der Ordinate bedeuten. Es mag somit mit der Offsetbestimmvorrichtung möglich sein, diesen Offset oder den Offsetwert zu bestimmen und ein Korrektursignal zu erzeugen. Dieses Korrektursignal kann bereitgestellt werden und genutzt werden, die gemessene Echokurve an die zu erwartende störungsfreie Echokurve anzunähern. Damit mag eine genaue Messung erleichtert werden.

Gemäß einem exemplarischen Ausführungsbeispiel der vorliegenden Erfindung beträgt der zeitliche Abstand der zeitgedehnten Abtastwerte des Reflexionssignals eine zweite Periodendauer oder eine dritte Periodendauer, wobei die zweite Periodendauer oder die dritte Periodendauer größer als die erste Periodendauer sein mag. Die Wahl der zeitlichen Abstände, mit denen eine empfangene Echokurve abgetastet wird, kann dazu führen, dass die periodisch erzeugte Echokurve durch Stützwerte oder Abtastwerte nachgezeichnet wird. Das Nachzeichnen der Echokurve kann eine zeitgedehnte Repräsentation der Echokurve erzeugen. Je näher die zweite Periodendauer an der ersten Periodendauer liegt, das heißt, je geringer der Unterschied der beiden Periodendauern ist, desto detailgetreuer mag die Echokurve in dem zeitgedehnten Bereich nachgezeichnet werden. Jedoch umso mehrere Periodendauern mag es benötigen, bis eine vollständige Echokurve nachgezeichnet ist.

Gemäß einem weiteren exemplarischen Ausführungsbeispiel der vorliegenden Erfindung mag die Dauer des Abschaltsignals einem ganzzahligen Vielfachen der ersten Periodendauer entsprechen.

Die Dauer des Abschaltsignals mag einen Zeitbereich oder ein Intervall beschreiben, währenddessen eine Sendeeinrichtung kein Sendesignal erzeugen mag. Dadurch mag sich der Empfang von Ruhewerten ergeben. Ruhewerte mögen unter der Voraussetzung erzeugt werden, dass im Wesentlichen keine Reflexionen vorhanden sind, so dass im Wesentlichen lediglich die Störungen der Umgebung während der Ruhephase von der Empfangseinrichtung oder von dem Empfänger empfangen werden mögen. Umgebungseinflüsse können beispielsweise ein Empfängerrauschen oder ein Umgebungsrauschen sein. Die Dauer des Abschaltsignals mag die zeitliche Dauer eines Ruheintervalls auf der Zeitachse bestimmen. Diese Dauer des Ruheintervalls oder die Ruhedauer kann auf einen örtlichen Bereich transformiert werden, den Ruhebereich. Werte, die während des Anliegens eines Abschaltsignals an einer Abtast-Empfangseinrichtung empfangen werden, mögen somit innerhalb des Ruhebereichs oder innerhalb der Ruhedauer liegen. Wegen der begrenzten Zeitdauer bestimmt der Ruhebereich ein Intervall oder einen Abschnitt einer Zeitskala, insbesondere einen Abschnitt einer Ortsskala. Durch diese Aufteilung der Skala kann das Ruheintervall als ein Abschnitt der jeweiligen Skala aufgefasst werden, der von anderen Bereichen umgeben ist, die als Außenbereiche außerhalb des Ruheintervalls aufgefasst werden können. Die Außenbereiche mögen das Ruheintervall einschließen. Empfangswerte, die während einer aktiven Sendeeinrichtung, also einer nicht abgeschalteten Sendeeinrichtung empfangen werden, mögen in diesen Außenbereichen außerhalb des Ruhebereichs liegen. Empfangswerte, die während einer deaktivierten Sendeeinrichtung, also einer abgeschalteten Sendeeinrichtung empfangen werden, mögen innerhalb des Ruhebereichs liegen.

Mit Bereich mag somit sowohl ein Zeitbereich wie auch ein örtlicher Bereich bezeichnet sein, wobei sich im Wesentlichen beide Bereiche durch Einbeziehen einer Signalausbreitungsgeschwindigkeit, im Wesentlichen der Lichtgeschwindigkeit, und eines Zeitdehnungsfaktors ineinander umrechnen lassen mögen.

Der Bereich außerhalb des Ruhebereichs mag im Wesentlichen der Messbereich sein. Der Messbereich mag den Bereich beschreiben, der für die Messung des Reflexionssignals von Interesse sein mag. Die Länge des Messbereichs kann in Abhängigkeit der Geräteausführung, beispielsweise einer Sondenlänge und/oder der Anwendung festgelegt werden, in der die Messvorrichtung genutzt wird. Bei der Anwendung kann die Behälterhöhe oder die relative Permittivität (εᵣ) des Füllguts eine Rolle spielen. Außerdem kann die Länge des Messbereichs von einem geplanten Sicherheitsbereichs beeinflusst werden. Der Sicherheitsbereich mag ein Bereich innerhalb des Messbereichs sein, der zur Sicherstellung vorgesehen ist, dass alle behälterrelevanten Reflexionen auch wirklich erfasst werden. In einem Beispiel mag der Messbereich einer tatsächlichen Behälterlänge entsprechen, also dem in einen Ortsbereich transformierten Zeitbereich einer Echokurve, in dem bei einer vorgegebenen Behälterhöhe oder Behälterlänge im Wesentlichen mit Echosignalen zu rechnen sein mag. Das zeitgedehnte Reflexionssignal mag somit einen Wechsel zwischen Messbereich und Ruhebereich nachzeichnen, wobei die Schnittstelle oder der Übergang zwischen beiden Bereichen als Grenze oder Bereichsgrenze bezeichnet werden mag.

Bei einer Betrachtung in einem Zeitbereich (time domain) mag somit ausgehend von einem Messbereich ein Ruhebereich nach einem Messbereich liegen. Entlang einer Ortsachse mag der Ruhebereich weiter von einer Sendeeinrichtung entfernt sein. Es mag vorgesehen sein, dass mit der Offsetbestimmung nicht unmittelbar an der Bereichsgrenze begonnen wird, sondern dass zunächst eine bestimmbare Zeit oder ein Sicherheitsintervall abgewartet werden mag, bevor der Offsetwert bestimmt wird. Wegen der sequentiellen Abtastung mag jedoch das Sicherheitsinterval deutlich kürzer ausfallen, als wenn mit dem nicht zeitgedehnten Signal gearbeitet würde.

Das Sicherheitsintervall mag sehr kurz gewählt werden. In einem Beispiel kann sich durch die Wahl der kurzen Länge des Sicherheitsintervalls oder des Sicherheitsbereichs unabhängig von der Länge des Messbereichs ein Ruhebereich von 1 m oder einer entsprechend transformierten Zeitdauer ergeben. Es mag als ein Aspekt der Erfindung angesehen werden, eine Offsetbestimmvorrichtung zu schaffen, die ein Ausschaltsignal generiert, welches zu einer Länge eines Ruhebereichs zur Offsetbestimmung von 1 m oder kleiner als 1 m führt. Die Länge des Messbereichs mag variabel einstellbar sein. In einem anderen Beispiel mag die Länge des Ruhebereichs 1 m oder 2 m betragen oder einem beliebigem Wert zwischen 1m und 2m.

Es muss folglich kein vom Messbereich abhängiger Ruhebereich eingehalten werden, da sich der Ruhepegel im Wesentlichen sofort einstellen mag, wenn der Sender deaktiviert wird. Die Länge des Messbereichs und des Ruhebereichs können unabhängig voneinander festgelegt werden. Eine gewisse Dauer zum Abklingen von Reflexionen kann sich ergeben, weil die nicht zeitgedehnten Reflexionssignale typischerweise über mehrere der ersten Periodendauern abklingen müssen. Die durch die Abtastung erzeugten zeitgedehnten Reflexionssignale benötigen entsprechend die gleiche Zeit um abzuklingen, wobei durch die Zeitdehnung diese Abklingzeit in Relation zu der Zeit, in der der Ruhepegel, oder der Zeit, in der der Messbereich anstehen, verschwindend gering ist. Beispielsweise liegt die Abklingzeit bei wenigen Mikrosekunden, während die Zeit für den Messbereich oder den Ruhebereich bedingt durch die Zeitdehnung in Bereich zwischen 1 und 100 Millisekunden liegen mag.

Gemäß einem weiteren exemplarischen Ausführungsbeispiel der vorliegenden Erfindung mag der vorgebbare Messbereich von einer Behälterhöhe abhängen.

Um eine variable Behälterhöhe berücksichtigen zu können, mag die Offsetbestimmvorrichtung eine Einstelleinrichtung vorsehen, mit der ein Benutzer die Behälterhöhe vorgeben und einstellen kann. Über diese Einstelleinrichtung kann auch der interessierende Messbereich vorgegeben werden, der je nach Einsatzfall variieren kann, der jedoch im Wesentlichen der Behälterhöhe oder einem entsprechenden Vergleichswert entsprechen mag. Die Steuereinrichtung kann diese Einstelleinrichtung auf weisen.

Gemäß noch einem anderen exemplarischen Ausführungsbeispiel der vorliegenden Erfindung mag die Offsetbestimmvorrichtung und insbesondere deren Offsetbereitstelleinrichtung derart eingerichtet sein, den Wert des Offsets der zeitgedehnten Abtastwerte des Reflexionssignals von dem Normal-Wert aus einer Mittelwertbildung aus einer Vielzahl von innerhalb des Ruhebereichs ermittelten Abtastwerten in der Offsetbereitstelleinrichtung zu berechnen.

Innerhalb des Ruhebereichs mag mit einer großen Wahrscheinlichkeit davon ausgegangen werden können, dass sämtliche Einflüsse von zuvor erzeugten

Reflexionen eines Messbereichs soweit abgeklungen sind, dass sie im Wesentlichen keinen Einfluss mehr auf die Bestimmung des Offsets haben mögen. Durch diese Wahl des Zeitpunktes oder des Ortes der Offsetbestimmung innerhalb des Ruhebereichs mag sich eine genaue Offsetbestimmung realisieren lassen. Der Ruhebereich kann an jedem beliebigen Ort innerhalb der periodischen Reflexionskurven oder Echokurven mit ebenfalls beliebiger Intervalllänge erzeugt werden, indem innerhalb dieses Intervalls die Sendeeinrichtung deaktiviert wird. Gemäß einem weiteren Aspekt der Erfindung wird der Ruhebereich direkt im Anschluss an das Ende des Messbereichs gewählt.

Gemäß noch einem anderen exemplarischen Ausführungsbeispiel der vorliegenden Erfindung kann die Offsetbestimmvorrichtung eine Auswahleinrichtung aufweisen, die so eingerichtet ist, dass sie einen zeitgedehnten Abtastwert, der innerhalb des Messbereichs auftritt, an einem ersten Ausgang der Auswahleinrichtung bereitstellt. Und ferner mag die Auswahleinrichtung so eingerichtet sein, dass sie den zumindest einen Abtastwert, der innerhalb des Ruhebereichs ermittelt wird und damit außerhalb des Messbereichs liegt, über einen zweiten Ausgang der Auswahleinrichtung an die Offsetbereitstelleinrichtung bereitstellt.

Mit einer solchen Auswahleinrichtung mag es möglich sein, abhängig von einem Schaltzustand Empfangswerte des Reflexionssignals an unterschiedliche Signalverarbeitungseinrichtungen der Offsetbestimmvorrichtung weiterzuleiten.

Beispielsweise können Reflexionswerte oder Abtastwerte, welche innerhalb des Messbereichs ermittelt werden, in einem ersten Schaltzustand an eine Offsetkorrektureinrichtung weitergeleitet werden, über die die empfangenen Signalwerte direkt als tatsächlich ermittelter Messwert bereitgestellt werden können. Die empfangenen Signalwerte können auch in der Offsetkorrektureinrichtung von dem Offset befreit werden und als korrigierte Echokurve nach einer Offsetkorrektur bereitgestellt werden. Bei der Bereitstellung der korrigierten Echokurve kann die Offsetbestimmvorrichtung vorsehen, zu ermitteln, ob eine Offsetkorrektur nötig ist und wenn sie nötig ist, den Offsetwert mit einzubeziehen. Falls keine solche Offsetkorrektur nötig ist, kann direkt die empfangene Echokurve bereitgestellt werden. Durch die Bestimmung aus einer Zeit bzw. Distanz zwischen einem Referenzsignal oder Sendesignal und der aus dem Reflexionssignal bestimmten Position der Reflexion der Füllgutoberfläche kann aus der korrigierten Echokurve ein Messwert bereitgestellt werden, der für einen Abstand oder einen Füllstand repräsentativ ist.

Die Auswahleinrichtung kann nach einem Umschalten in einem zweiten Schaltzustand die während eines Ruhebereiches oder innerhalb eines Ruhebereichs empfangenen Werte an die Offsetbereitstelleinrichtung weiterreichen. Die Offsetbereitstelleinrichtung kann aus den Werten innerhalb des Ruhebereichs den gerade aktuellen Offsetwert bestimmen und kann diesen aktuellen Offsetwert beispielsweise der Offsetkorrektureinrichtung zur Verfügung stellen. In dem zweiten Schaltzustand kann durch Mittelwertbildung ein durchschnittlicher Offsetwert zur Erhöhung der Genauigkeit über eine längere Zeitdauer ermittelt werden.

Die Auswahleinrichtung mag somit ein Sortieren der Reflexionssignale ermöglichen. Die Abtastwerte des Reflexionssignals, die innerhalb des Messbereichs auftreten, werden durch den ersten Schaltzustand an die Offsetkorretureinrichtung weitergeleitet. Die Abtastwerte, die innerhalb des Ruhebereichs empfangen worden sind, können an die Offsetbestimmeinrichtung weitergeleitet werden. Die Gesamtmenge der Abtastwerte des Reflexionssignals innerhalb einer Periodendauer können somit in die Teilmenge der Abtastwerte des Ruhebereichs und die Teilmenge der Abtastwerte des Messbereichs aufgeteilt werden. Insbesondere kann die Auswahleinrichtung durch das Umschalten für das Vorgeben der Bereichsgrenzen zwischen dem Messbereich und dem Ruhebereich sorgen. Die Auswahleinrichtung mag für dieses Vorgeben der Bereichsgrenzen im Wesentlichen mit der Steuereinrichtung gekoppelt sein, welche auch das Abschaltsignal für die Sendeeinrichtung erzeugen mag.

Gemäß noch einem anderen exemplarischen Ausführungsbeispiel der vorliegenden Erfindung mag die Offsetbereitstelleinrichtung eingerichtet sein, den ermittelten Wert des Offsets oder der Abweichung der zeitgedehnten Abtastwerte des Reflexionssignals von einem Normal-Wert für eine Offsetkorrektur des Reflexionssignals vor einer Abtastung oder vor einer Digitalisierung des Reflexionssignals zu nutzen. Alternativ oder ergänzend kann die Offsetbereitstelleinrichtung eingerichtet sein, den ermittelten Wert des Offsets für eine Offsetkorrektur des Reflexionssignals nach der Digitalisierung des Reflexionssignals zu nutzen. Zur Unterscheidung von der Abtastung zum Zwecke der Zeitdehnung kann die Abtastung des Reflexionssignals zum Zwecke der Digitalisierung als AD (analog/digital)-Wandlung oder Digitalisierung bezeichnet werden. Zur Digitalisierung kann ein Abtastsignal mit der dritten Periodendauer genutzt werden. Die dritte Periodendauer zur Digitalisierung kann gleich der zweiten Periodendauer der Abtastung zur Zeitdehnung sein oder aber davon verschieden

Vor der Digitalisierung des Reflexionssignals mag das zeitgedehnte Reflexionssignal als ein im Wesentlichen analoges Reflexionssignal oder als analoge Echokurve vorliegen.

Nach der Digitalisierung, beispielsweise durch einen Analog-Digital-Wandler (A/D-Wandler), mögen diskrete Werte der analogen zeitgedehnten Echokurve eine diskrete zeitgedehnte Echokurve beschreiben. Die diskreten Werte der diskreten Echokurve können im Gegensatz zu den analogen Werten mittels einer digitalen Signalverarbeitungseinrichtung durch Berechnungen korrigiert werden. Zu dieser Berechnung können beispielsweise ein Mikroprozessor und Methoden der digitalen Signalverarbeitung eingesetzt werden.

Eine Offsetkorrektur auf der analogen Seite, das heißt vor der Digitalisierung der Echokurve, mag mit Hardware-Einrichtungen möglich sein, wie beispielsweise einem analogen Stellglied oder einem Digitalpotentiometer. Eine analoge Korrektur kann auch mit einer digitalen Korrektur kombiniert werden, um einen stärkeren Einfluss auf das zu korrigierende Reflexionssignal zu haben.

Gemäß noch einem anderen exemplarischen Ausführungsbeispiel der vorliegenden Erfindung kann die Offsetbestimmvorrichtung eine Offsetkorrektureinrichtung aufweisen, wobei die Offsetkorrcktureinrichtung eingerichtet ist, die zeitgedehnten Abtastwerte des Reflexionssignals zu korrigieren, um eine störbereinigte Reflexionskurve oder eine störbereinigte Echokurve bereitzustellen, die um den Wert des Offsets korrigiert ist. Durch das Bereinigen der Störungen in der Echokurve mag die ideale störungsfreie Echokurve angenähert werden.

Gemäß noch einem anderen exemplarischen Ausführungsbeispiel der vorliegenden Erfindung mag die Offsetbestimmvorrichtung eine Deaktivierungseinrichtung aufweisen. Die Deaktivierungseinrichtung kann beispielsweise einem Benutzer ermöglichen, zu einem beliebigen Zeitpunkt das Abschaltsignal zu senden, beispielsweise auch innerhalb des Messbereichs. Die Deaktivierungseinrichtung kann somit die Steuereinrichtung überschreiben.

In anderen Worten mag es die Deaktivierungseinrichtung ermöglichen, unverzüglich ohne Beachtung, ob das Ende des Messbereichs innerhalb der Echokurve schon erreicht ist, eine Offsetmessung durchführen zu können.

Gemäß noch einem anderen exemplarischen Ausführungsbeispiel der vorliegenden Erfindung mögen die zeitgedehnten Abtastwerte des Reflexionssignals durch sequentielles Abtasten und/oder durch Digitalisieren erzeugt werden. Das sequentielle Abtasten mag dem Durchführen einer Kreuzkorrelation entsprechen. Die Erzeugung der zeitgedehnten Abtastwerte mag im Wesentlichen zweistufig ablaufen. In einer ersten Stufe mag mittels Kreuzkorrelation oder sequentiellem Abtasten aus einer periodischen analogen Reflexionskurve ein zeitgedehntes analoges Reflexionssignal oder ein zeitgedehntes analoges Echosignal erzeugt werden. Dieses zeitgedehnte analoge Echosignal mag dann in einer zweiten Stufe mittels eines A/D-Wandlers diskretisiert oder digitalisiert werden. Als Ergebnis liegen dann die zeitgedehnten Abtastwerte des Reflexionssignals vor. Die Offsetbestimmvorrichtung mag in einem Beispiel eine Einrichtung zum Erzeugen der zeitgedehnten Abtastwerte nach diesem zweistufigen Verfahren aufweisen. Die zeitgedehnten Abtastwerte können aber auch von einer externen Sendeeinrichtung bereitgestellt werden.

Gemäß noch einem anderen exemplarischen Ausführungsbeispiel der vorliegenden Erfindung mag die Messvorrichtung eine Messvorrichtung sein, welche aus der Gruppe ausgewählt ist, die aus einem Füllstandmessgerät, aus einem Grenzstandmessgerät, aus einem Laufzeitmessgerät, aus einem Reflexionsmessgerät und einem Messgerät basierend auf dem Prinzip der geführten Mikrowelle besteht.

Ein computerlesbares Speichermedium mag eine Floppy Disk, eine Festplatte, ein USB (Universal Serial Bus)-Speichermedium, ein RAM (Random Access Memory), ein ROM (Read Only Memory) oder ein EPROM (Erasable Programmable Read Only Memory) sein. Als computerlesbares Speichermedium kann auch ein Kommunikationsnetzwerk, wie das Internet angesehen werden, welches das Aufspielen oder Herunterladen von Programmcode ermöglichen mag.

Es mag sich bei vorliegender Erfindung somit um eine Vorrichtung handeln, welche die Idee verwirklicht, eine periodisch empfangene Echokurve in einen zeitgedehnten Bereich zu transformieren und einen Ruhebereich zu generieren. Durch die Zeitdehnung mag ein geeigneter Bereich zur Verfügung stehen, in dem ein Sender abgeschaltet werden kann und in dem es erwartet werden kann, dass Reflexionssignale sehr schnell abgeklungen sind, um mit einem aktiven Empfänger oder mit einer aktiven Empfangsvorrichtung einen Offsetwert zu bestimmen. Dieser Offsetwert mag geeignet sein die empfangene störbehaftete Echokurve so zu verschieben, dass sie sich einer Soll-Echokurve annähert. Diese Soll-Echokurve würde sich ergeben, wenn die Reflexionssignale mit einer im Wesentlichen störungsfreien oder idealen Empfangseinrichtung empfangen worden wären. Bei der Bestimmung der Soll-Echokurve oder der störbereinigten Echokurve mag die Verschiebung eines empfangenen Ruhewertes von einem Soll-Ruhewert, von einem erwarteten Idealwert oder von einem Normal-Wert in Betracht gezogen werden. In anderen Worten kann während des Ruhebereichs die Abweichung der tatsächlich gemessenen Ruhereflexionskurve von der zu erwartenden Sollruhekurve gemessen werden. Bei der Sollruhekurve mag es sich um eine Kurve handeln, deren Verlauf im Vorfeld bekannt ist. Beispielsweise ist der Verlauf einer Null-Amplitudenkurve bekannt, die als Soll-Ruhekurve betrachtet werden kann und den erwarteten Echoverlauf widerspiegelt, wie er sich bei Abwesenheit jedweden Reflexions- oder Empfangssignals oder bei einem abgeschalteten Sender einstellt. Eine Echokurve, die Reflexionen enthält mag als Soll-Ruhekurve nicht geeignet sein. Daher sollte eine Reflexionskurve eines leeren Behälters nicht als Referenzkurve oder Soll-Ruhekurve genutzt werden. Die Soll-Ruhekurve sollte vielmehr einen im Wesentlichen konstanten Verlauf bei bekannten Randbedingungen aufweisen, so dass im Wesentlichen davon ausgegangen werden kann, dass sich nach dem Einstellen der Randbedingung der erwartete Verlauf ergeben würde und jede Abweichung vom erwarteten Verlauf eine Störung darstellt.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es ist anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Die Fig. 1 zeigt eine Messanordnung oder einen Messaufbau zur Füllstandmessung mit einer Freifeldausbreitung eines Sendesignals gemäß einem exemplarischen Ausführungsbeispiel der vorliegenden Erfindung.
Die Fig. 1a zeigt eine Messanordnung oder einen Messaufbau zur Füllstandmessung mit einem Sendesignal, das sich nach dem Prinzip der geführten Mikrowelle ausbreitet, gemäß einem exemplarischen Ausführungsbeispiel der vorliegenden Erfindung.
Die Fig. 2 zeigt ein Blockdiagramm der Offsetbestimmvorrichtung gemäß einem exemplarischen Ausführungsbeispiel der vorliegenden Erfindung.
Fig. 3 zeigt ein Blockdiagramm einer Messvorrichtung umfassend eine Sende-Empfangseinrichtung und eine Offsetbestimmvorrichtung gemäß einem exemplarischen Ausführungsbeispiel der vorliegenden Erfindung.
Fig. 4 zeigt eine schematische Darstellung der Erzeugung von zeitgedehnten Abtastwerten eines Reflexionssignals gemäß einem Ausführungsbeispiel der vorliegenden Erfindung.
Fig. 5 zeigt ein Blockdiagramm einer Sende-Empfangseinrichtung, wobei die Sende-Empfangseinrichtung mittels Deaktivieren eines Oszillators ausgeschaltet werden kann, gemäß einem exemplarischen Ausführungsbeispiel der vorliegenden Erfindung.
Fig. 6 zeigt ein Blockdiagramm einer Sende-Empfangseinrichtung, wobei die Sende-Empfangseinrichtung mittels Deaktivieren eines Impulsgenerators ausgeschaltet werden kann, gemäß einem exemplarischen Ausführungsbeispiel der vorliegenden Erfindung.
Fig. 7 zeigt ein Blockdiagramm einer Sende-Empfangseinrichtung, wobei die Sende-Empfangseinrichtung mittels einer Ein-/Ausschalteeinrichtung ausgeschaltet werden kann, gemäß einem exemplarischen Ausführungsbeispiel der vorliegenden Erfindung.
Fig. 8 zeigt ein Flussdiagramm für ein Verfahren zur Bestimmung eines Offsets gemäß einem Ausführungsbeispiel der vorliegenden Erfindung.
Die Fig. 9 zeigt ein weiteres Flussdiagramm eines Verfahrens zum Bestimmen eines Offsets gemäß einem Ausführungsbeispiel der vorliegenden Erfindung.

### Detaillierte Beschreibung von Ausführungsbeispielen

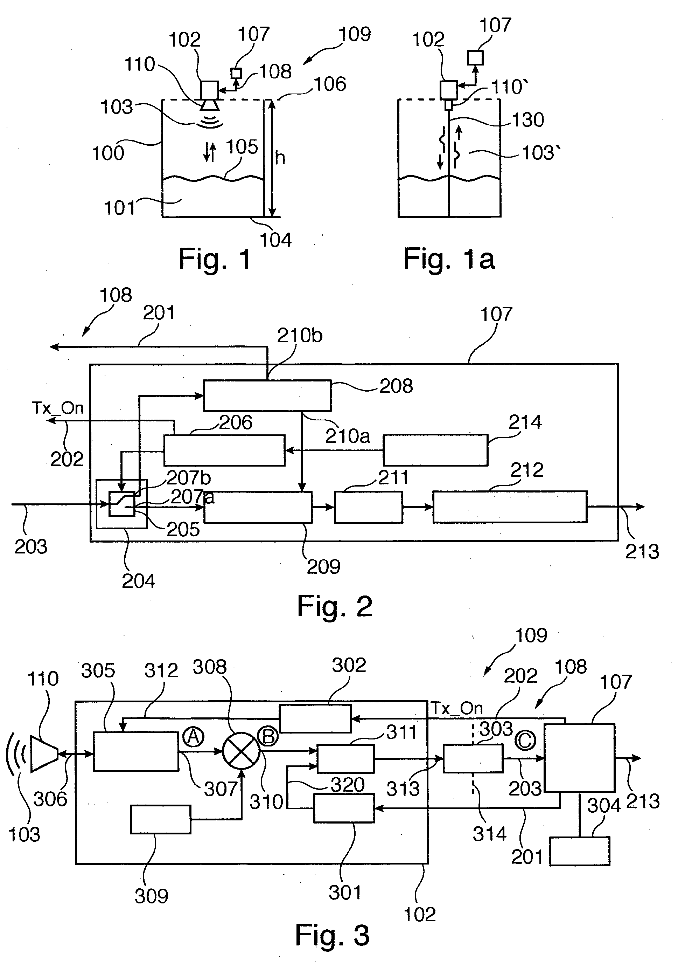

Die Darstellungen in den Figuren sind schematisch und nicht maßstäblich. In der folgenden Beschreibung der Fig. 1 bis Fig. 9 werden die gleichen Bezugszeichen für gleiche oder sich entsprechende Elemente verwendet.

Die Fig. 1 zeigt eine Messanordnung 109 oder einen Messaufbau 109 zur Füllstandmessung gemäß einem exemplarischen Ausführungsbeispiel der vorliegenden Erfindung. Bei der Füllstandmessung soll in einem Behälter 100 möglichst genau der Füllstand des Füllgutes 101 bestimmt werden. Der Behälter 100 weist hierbei eine Höhe h auf, die im Wesentlichen parallel zu der Signalausbreitungsrichtung gemessen wird. In dem Behälter können Einbauten (nicht gezeigt in Fig. 1) vorhanden sein, die das Reflexionsverhalten beeinflussen können. Zum Bestimmen der Höhe h wird von einer Sende-Empfangseinrichtung 102 oder einem Sensor 102 ein Sendesignal 103 erzeugt, welches in Richtung eines der Sende-Empfangseinrichtung 102 gegenüberliegenden Behälterbodens 104 ausgesendet wird und entweder an dem Behälterboden 104 oder, bei Vorhandensein eines Füllguts 101, an der Füllgutoberfläche 105 reflektiert wird. Das reflektierte Signal wird von der Sende-Empfangseinrichtung 102, die eine Sende- und Empfangstrennung 305 und/oder einen Transmitter 302 aufweisen kann, empfangen und weiterverarbeitet. Unter dem Abschalten des Senders soll verstanden werden, dass der Sendeteil 302 der Sende-Empfangseinrichtung 102 abgeschaltet wird. Das Empfangen eines Signals mit dem Empfangsteil der Sende-Empfangseinrichtung 102 soll immer noch möglich sein. Bei der Weiterverarbeitung wird aus den ermittelten Laufzeiten des ausgesendeten Signals und des reflektierten Signals in der Messvorrichtung 109 eine Entfernung des Reflektors, beispielsweise die Entfernung der Füllgutoberfläche 105 oder des Behälterbodens 104, von einer Bezugslinie 106 der Sende-Empfangseinrichtung 102 ermittelt. Die Bezugslinie mag durch den Einbauort der Sende-Empfangseinrichtung 102 und insbesondere durch den Einbauort der Antenne 110 bestimmt sein.

Beim Empfangen der Reflexionssignale kann jedoch durch Umwelteinflüsse eine Störung in Form eines Offsets entstehen, welcher für ein mit einem Fehlerwert beaufschlagtes Reflexionssignal sorgt. Das gemessene Reflexionssignal entspricht wegen des Offsets nicht dem erwarteten Reflexionssignal, sondern einem um den im Wesentlichen konstanten Offsetwert verschobenen Reflexionssignal. Mit der Offsetbestimmvorrichtung 107 soll diese Verschiebung, diese Abweichung oder dieser Offset von einem Bezugswert kompensiert werden. Bei dem Bezugswert kann es sich beispielsweise um eine Null-Amplitude handeln, aber auch um die zu erwartende Echokurve. Für das Kompensieren des Offsets ermittelt die Offsetbestimmvorrichtung 107 den Offsetwert und sorgt für die Offsetkorrektur. Die Offsetkorrektur kann bewirken, dass im Wesentlichen ein Reflexionssignal bestimmt wird, das nahe an dem erwarteten Soll-Reflexionssignal liegt. Die Sende-Empfangseinrichtung 102 ist über eine Schnittstelle 108 mit der Offsetbestimmvorrichtung 107 verbunden und sie bilden gemeinsam das Messsystem 109 oder die Messvorrichtung 109. Die Verbindung zwischen der Offsetbestimmvorrichtung 107 und Sende-Empfangseinrichtung 102 erfolgt beispielsweise über eine Feldbusschnittstelle, über eine I²C-Schnittstelle (Inter-Integrated Circuit), über eine SPI (Serial Peripheral Interface) oder über eine andere serielle oder parallele Schnittstelle.

Auch wenn in Fig. 1 die Offsetbestimmvorrichtung 107 als externe Vorrichtung zu der Sende-Empfangseinrichtung 102 dargestellt ist, kann die Offsetbestimmvorrichtung 107 auch in die Sende-Empfangseinrichtung 102 integriert sein. Durch das Bereitstellen einer Standardschnittstelle 108 kann die Offsetbestimmvorrichtung 107 auch bei bestehenden Sende-Empfangseinrichtungen 102 oder Sensoren 102 nachgerüstet werden, um auch in bereits installierten Sendeeinrichtungen eine Offsetkorrektur zu ermöglichen.

Ein Offset stellt im Allgemeinen einen Wert einer Verschiebung einer Kurve oder einer Kennlinie von einem Sollwert dar. Im vorliegenden Fall der Offsetkorrektur einer Echokurve oder eines Reflexionssignals soll ein Offset eine Amplitudenabweichung oder eine Differenz zwischen einer Echokurve bezeichnen, die im Wesentlichen ohne Störeinflüsse ermittelt wird, und einer Echokurve, die unter Berücksichtigung von Störeinflüssen ermittelt wird. Zu einer Offsetverschiebung der Echokurve oder des Reflexionssignals kann es durch physikalische Einflüsse, wie beispielsweise Temperaturschwankungen, wie der absoluten Temperatur, durch elektromagnetische Störungen, durch den Aufbau einer Empfangselektronik und durch entsprechende Rauscheinflüsse kommen. Diese Einflüsse können sowohl auf eine Übertragungsstrecke für das Signal einwirken als auch auf die Empfangselektronik.

Fig. 1 a zeigt eine Messanordnung, die zur Füllstandmessung das Prinzip der geführten Mikrowelle nutzt. Der Aufbau dieser Messanordnung entspricht im Wesentlichen dem Aufbau der Messanordnung 109 aus Fig. 1. Anstelle der Antenne 110 wird die Einkoppeleinrichtung 110' genutzt, die eingerichtet ist, das Sendesignal 103' in die Führung 130 einzukoppeln. Die Führung 130 kann als Stabsonde, als metallisches Seil, als Stab, als Wellenleiter oder als Koaxleitung ausgebildet sein. Anstelle im Freifeld breitet sich das Signal 103' entlang der Führung 130 aus. Die Beschreibung für den Messaufbau mit der Freifeldausbreitung aus Fig. 1 gilt entsprechend für den Messaufbau aus der Fig. 1a, der das Prinzip der geführten Mikrowelle nutzt, auch wenn in der Beschreibung nur auf die Freifeldausbreitung eingegangen wird.

Der durch die Störeinflüsse erzeugte Offset sollte kompensiert oder korrigiert werden, da er zu einer Begrenzung der Systemempfindlichkeit führen kann. Die Systemempfindlichkeit wird durch das kleinste noch zu detektierende Echo festgelegt. Hierbei bezeichnet ein Echo einen Ausschlag einer Empfangsamplitude der Echokurve von einem festgelegten Referenzwert oder Normal-Wert in Richtung der Ordinate eines Koordinatensystems in dem die Echokurve dargestellt ist. Der Referenzwert ist beispielsweise eine Null-Amplitude und kann mit der Abszisse 403 des Koordinatensystems zusammenfallen. Der Normal-Wert mag als derjenige Amplitudenwert definiert sein, der sich einstellen würde, wenn sämtliche oder alle Störeinflüsse nicht vorhanden wären und wenn der Empfänger keinerlei Empfangssignale empfinge.

Da der Offset zu einer Abweichung von dem Normal-Wert führen kann und der Offset beispielsweise aufgrund von zeitlich veränderlichen Größen, wie der Temperaturschwankung selbst zeitabhängig sein kann, könnte ein zu großer Offset selbst als Echo erkannt werden und in einem Fall, in dem kein Echo vorhanden ist, auch zu einer Detektion eines Echos führen und somit zu einer fehlerhaften Ausgabe der Messvorrichtung 109.

Da die Systemempfindlichkeit durch das kleinste noch zu detektierende Echo festgelegt wird, kann ein Offset in einem Echosignal zu einer Fehlinterpretation führen, da oftmals zum Zweck der Echodetektion eine Detektionskurve über die Echokurve gelegt wird. Die Detektionskurve kann auf sehr viele unterschiedliche Arten gebildet werden, z.B. als eine oder mehrere Geraden, die parallel zur Abszisse verläuft/verlaufen, als sonstige steigende oder fallende Geraden, als einfach oder mehrfach gekrümmte Funktionen oder gebildet aus einer einmal gespeicherten Echokurve. Die gespeicherte Echokurve kann z.B. durch das Messen einer Echokurve bei einem leerem Behälter bestimmt werden, wobei zur Bildung der gespeicherten Echokurve auf eine Echokurve z.B. Filterverfahren angewendet werden können, wie ein Hochpass, ein Tiefpass oder ein Bandpass.

Die Detektionskurve kann auch eine sehr stark abstrahierte Echokurve sein, welche als Schwellwertkurve für die Detektion der Echos dient. Je näher diese Kurve an die Soll-Echokurve gelegt werden kann, also je besser eine Echokurve mit geringem Offset ermittelt werden kann, desto kleinere Echos können noch detektiert werden.

Je näher diese Detektionskurve an dem Ruhe-Wert der Echokurve liegt, desto mehr Echos können detektiert werden und desto empfindlicher wird das System zur Detektion von Echos. Man ist bei der Wahl der Detektionskurve bemüht, einen möglichst geringen Abstand zwischen der erwarteten Echokurve und der Detektionskurve einzuhalten. Der Abstand zwischen den Kurven ist die Detektionsschwelle. Je geringer diese gewählt werden kann desto kleinere Echos können noch erfasst werden. Die Detektionsschwelle kann z.B. einen Wert von 5 mV aufweisen. In einem Fall, bei dem im Wesentlichen keinerlei Störungen vorhanden sind, könnte die Detektionskurve sogar mit der Normal-Wert-Kurve oder auch mit einer Nulllinie übereinstimmen und könnte eine Gerade sein. Das heißt, jede Abweichung, die in einer Echokurve von der Nulllinie erkannt wird, kann als Echo interpretiert werden. Oftmals ist jedoch die Detektionskurve im Wesentlichen eine parallele Linie zu der Normal-Wert-Kurve oder Null-Amplitude, da es im Wesentlichen immer gewisse Verschiebungen geben kann. Somit werden Echos erst erkannt, wenn sie eine Höhe oder Signalamplitude aufweisen, welche über der Detektionskurve liegen. Da es bei einer Echokurve zu positiven und negativen Ausschlägen kommen kann, werden im Bedarfsfall zwei Detektionskurven, eine oberhalb und eine unterhalb der Normal-Wert-Kurve, verwendet, durch die im Wesentlichen ein Toleranzbereich um die Normal-Wert-Linie herum beschrieben wird. Die Detektionskurve kann in verschiedene Bereiche mit unterschiedlichen Detektionsschwellen aufgeteilt sein. Beispielsweise kann im Nahbereich eine höhere Schwelle als im Fernbereich eingestellt sein. Der Nahbereich mag sich bis 0,5 m von der Bezugslinie 106 entfernt befinden. Durch einen auf der ermittelten Echokurve zu erwartenden Offset wird der Abstand der Detektionskurve zu der störungsfreien Echokurve festgelegt. Je geringer der Offset ausfällt, desto geringer fällt der Abstand zwischen der störungsfreien Echokurve und der Detektionskurve aus. Je geringer der Abstand ist, also je weniger Offset zu erwarten ist, da er beispielsweise korrigiert wird, desto größer ist die Empfindlichkeit des Gesamtsystems.

Die Fig. 2 zeigt ein Blockschaltbild der Offsetbestimmvorrichtung 107 gemäß einem exemplarischen Ausführungsbeispiel der vorliegenden Erfindung. Die Offsetbestimmvorrichtung 107 weist eine externe Schnittstelle 108 auf, die mit einer in Fig. 2 nicht dargestellten Sende-Empfangseinrichtung 102 verbunden ist oder verbunden werden kann. Die Schnittstelle 108 umfasst beispielsweise drei Leitungen 201, 202, 203, die eine Anschlussmöglichkeit zu der Sende-Empfangseinrichtung 102 bereitstellen. Die Schnittstelle 108 zeigt eine erste Verbindung 201, über die einem Stellglied ein Korrekturwert zur Kompensierung eines von der Offsetbestimmvorrichtung 107 bestimmten Offsetwertes bereitgestellt werden kann. Dieses Stellglied kann beispielsweise ein Digitalpotentiometer sein, welches zur Offsetregelung oder Offsetkorrektur einer analogen Echokurve B dienen kann. Die Schnittstelle 108 umfasst ebenfalls eine zweite Verbindung 202, über die ein Steuersignal mit dem Namen Tx_On mit einer Sende-Empfangseinrichtung 102 ausgetauscht werden kann, welches in Abhängigkeit von seiner Definition zum An- und/oder Abschalten des Transmitters 302 genutzt werden kann. Somit kann über diese Schnittstelle 202 das Abschaltsignal zur Erzeugung des Ruhebereichs an die Sende-Empfangseinrichtung 102 bereitgestellt werden.

Die Schnittstelle 108 umfasst ebenfalls eine dritte Verbindung, die als Eingang eingerichtet ist. Der Eingang 203 ist mit der Abtast-Empfangseinrichtung 204 verbunden. Über die Abtast-Empfangseinrichtung 204 kann sowohl die Echokurve, also beispielsweise die zeitgedehnten Abtastwerte des Reflexionssignals, als auch die Offsetkurve von der Offsetbestimmvorrichtung 107 empfangen oder eingelesen werden.

Die Verbindungen 201, 202, 203 der Schnittstelle 108 können als separate Leitungen oder als virtuelle Kanäle mit Hilfe eines Busprotokolls realisiert sein. Die Abtast-Empfangseinrichtung 204 kann die Auswahleinrichtung 205 aufweisen, die von der Steuereinrichtung 206, der Abtaststeuereinrichtung 206 oder der Abtaststeuerung 206 angesteuert wird. Die Auswahleinrichtung 205 weist den ersten Ausgang 207a und den zweiten Ausgang 207b auf. Über den ersten Ausgang 207a kann die Auswahleinrichtung 205 in einem ersten Schaltzustand Abtastwerte der Echokurve bereitstellen, welche innerhalb des Messbereichs liegen. Über den zweiten Ausgang 207b kann die Auswahleinrichtung 205 in einem zweiten Schaltzustand Abtastwerte der Echokurve zur Verfügung stellen, welche innerhalb des Ruhebereichs liegen.

Die abgetastete gesamte Echokurve oder gesamte Reflexionskurve weist zwei Bereiche auf. Einerseits weist die gesamte Reflexionskurve den Messbereich auf, in welchem die gemessenen Reflexionswerte bei vorhandenem Reflexionssignal enthalten sind. Andererseits weist die gesamte Reflexionskurve den Offsetbereich, Ruhebereich oder einen als Offsetkurve bezeichneten Bereich auf, der/die den Teil der gesamten Reflexionskurve bezeichnen mag, der aufgenommen wird, während die Sende-Empfangseinrichtung 102 und insbesondere ein Sendeteil der Sende-Empfangseinrichtung 102 abgeschaltet ist. Der Wechsel zwischen den Schaltzuständen mag mit den Bereichsgrenzen zwischen dem Messbereich und dem Ruhebereich synchronisiert sein.

Über den zweiten Ausgang 207b kann die Offsetkurve an die Offsetbereitstelleinrichtung 208 weitergegeben werden. Über den ersten Ausgang 207a kann die Echokurve oder der Messbereich an die Offsetkorrektureinrichtung 209 weitergegeben werden. Die Auswahleinrichtung 205 erlaubt somit eine Zerlegung der gesamten Reflexionssignale in die Echokurve und in die Offsetkurve und die unterschiedlichen Bereiche an unterschiedliche Signalverarbeitungseinrichtungen weiterzureichen. Die Echokurve umfasst die innerhalb des Messbereichs vorhandene Teilmenge der Abtastwerte. Die Offsetkurve umfasst die innerhalb des Ruhebereichs vorhandene Teilmenge der Abtastwerte. Mit der Auswahleinrichtung 205 kann somit sichergestellt werden, dass der Offsetbereitstelleinrichtung 208 im Wesentlichen nur diejenigen Abtastwerte zur Verfügung gestellt werden, die in einem Bereich oder einem Zeitintervall aufgenommen oder empfangen wurden, während dem der Sender abgeschaltet war. Die Aufteileinrichtung 205 oder Auswahleinrichtung 205 kann ferner sicherstellen, dass der Offsetkorrektureinrichtung 209 im Wesentlichen nur die Abtastwerte bereitgestellt werden, die ermittelt wurden, während dem auch die Sendeeinrichtung aktiv war und während dem somit Echos und Reflexionssignale innerhalb des Behälters zu erwarten sind.

Die Offsetbereitstelleinrichtung 208 kann auch als Offsetbestimmeinrichtung 208 bezeichnet werden. Die Offsetbereitstelleinrichtung 208 kann anhand der Abweichungen der empfangenen Offsetkurve von einem Normal-Wert oder anhand der Abweichungen der Abtastwerte des Ruhebereichs von einem Normal-Wert den Offsetwert bestimmen. Insbesondere kann die Offsetbereitstelleinrichtung 208 einen Offsetwert für eine digitale oder rechnerische Offsetkorrektur bereitstellen und ebenso einen Offsetwert für eine analoge Offsetkorrektur.

Ein Signal zur analogen Offsetkorrektur kann über den zweiten Ausgang 210b der Offsetbereitstelleinrichtung 208 über die Verbindung 201 der Schnittstelle 108 an ein Stellglied der Sendeeinrichtung (nicht gezeigt in Fig. 2) auf der analogen Seite bereitgestellt werden. Der zweite Ausgang 210b stellt somit ein Signal zur Offsetkorrektur vor der Digitalisierung mit dem A/D-Wandler oder auf der analogen Seite bereit.

Für eine digitale Offsetkorrektur kann ein digitaler Offsetwert bestimmt werden. Der digitale Offsetwert kann über den ersten Ausgang 210a der Offsetbereitstelleinrichtung 208 an die Offsetkorrektureinrichtung 209 bereitgestellt werden. Die Offsetkorrektureinrichtung 209 kann den digitalen Offsetwert nutzen, um die empfangene Echokurve, das heißt die Abtastwerte des Reflexionssignals innerhalb des Messbereichs, also bei aktivem Sender, um den Wert des Offsets zu korrigieren und an eine Mittelungseinrichtung 211 weiterzugeben. Das Signal an dem ersten Ausgang 210a dient der digitalen Offsetkorrektur, beispielsweise durch einen Prozessor. Die Mittelungseinrichtung 211 bestimmt einen Mittelwert der um den Offset bereinigten Echokurve als Scharmittel, d.h. es mag eine mittlere Echokurve über mehrere Messungen bestimmt werden. Zum Bestimmen des Scharmittels werden Abtastwerte der vergangenen Echokurven mit Abtastwerten der aktuellen Echokurve am jeweils gleichen Ort gemittelt. Diese gemittelte Echokurve wird an die EndverarbeitungsEinrichtung 212 weitergereicht und die Endverarbeitungseinrichtung 212 berechnet sodann aus den ermittelten Echowerten einen Distanzwert der Füllgutoberfläche und daraus einen Messwert, beispielsweise einen Füllstand. Der Füllstand kann zum Beispiel der Abstand der Füllgutoberfläche 105 von der Bezugslinie 106 sein und für eine weitere Verarbeitung an dem Ausgang 213 der Offsetbestimmvorrichtung 107 bereitgestellt werden. Zum Bestimmen des Abstandes kann das Sendesignal 130 und insbesondere der Zeitpunkt des Aussendens des Sendesignals 130 als Referenzsignal genutzt werden.

Zur Bestimmung des Offsets während der Sender 302 deaktiviert ist erfolgt in der Offsetbereitstelleinrichtung 208 zur Bestimmung des Offsets die Berechnung des arithmetischen Mittelwerts einer Vielzahl von innerhalb des Ruhebereichs II ermittelten Abtastwerte.

Fig. 3 zeigt ein Blockdiagramm einer Messvorrichtung 109 umfassend eine Sende-Empfangseinrichtung 102 und eine Offsetbestimmvorrichtung 107 gemäß einem exemplarischen Ausführungsbeispiel der vorliegenden Erfindung. Die Offsetbestimmvorrichtung 107 ist in dem Beispiel der Fig. 3 als Mikrocontroller µC 107 realisiert, auf dem ein Computerprogrammprodukt ausgeführt wird. Die Offsetbestimmvorrichtung 107 kann jedoch auch als Hardwarebaugruppe realisiert sein, beispielsweise in Form eines FPGAs (Field Programmable Gate Array) oder als Kombination eines Mikrocontrollers mit einer Hardwarebaugruppe. Über die Schnittstelle 108, welche die Feedback-Verbindung 201 zu dem Stellglied 301 aufweist und die Steuerverbindung 202, über die das Steuersignal Tx_On an einen Transmitter 302 bereitgestellt wird, kann eine Verbindung zwischen den Komponenten Offsetbestimmvorrichtung 107 und Sende-Empfangseinrichtung 102 des Messsystems 109 hergestellt werden. Ebenso weist die Schnittstelle 108 die Eingangsverbindung 203 auf, über die die von dem Analog-Digital-Wandler 303 ermittelten Abtastwerte des Reflexionssignals C ausgetauscht werden, welche von der Sende-Empfangseinrichtung 102, insbesondere von einem entsprechenden Empfangsteil, und dem A/D-Wandler 303 ermittelt wurden. Die Offsetbestimmvorrichtung 107 kann zum Speichern der Echokurve bzw. der Offsetkurve und insbesondere zum Speichern von ermittelten Offsetwerten die Speichereinrichtung 304 aufweisen.

Über den Ausgang 213 der Offsetbestimmvorrichtung107 stellt die Offsetbestimmvorrichtung 107 einen ermittelten Messwert zur Weiterverarbeitung zur Verfügung.

Die vom Transmitter 302 erzeugten hochfrequenten (HF) Sendesignale werden über die Leitung 312 zur Sende-Empfangstrennung 305 und über deren bidirektionalen Ein- und Ausgang 306 an die Antenne 110 oder an die Einkoppeleinrichtung 110' (nicht in Fig. 3 dargestellt) weitergeleitet. Von der Antenne 110 oder Einkoppeleinrichtung 110' werden die Sendesignale 103 bzw. 103' wie in Fig. 1 und Fig. 1a dargestellt in Richtung der reflektierenden Fläche oder der Vielzahl von reflektierenden Flächen ausgesandt. Ebenfalls über die Antenne 110 oder Einkoppeleinrichtung 110' wird ein reflektiertes Signal empfangen und über die Sende-Empfangstrennung 305, welche beispielsweise eine Zirkulatorvorrichtung oder ein Richtkoppler sein kann, an dem Ausgang 307 der Sende-Empfangstrennung 305 als eine analoge Echokurve A oder als analoges Reflexionssignal A bereitgestellt. Die analoge Echokurve A ist im Wesentlichen periodisch mit einer Periodendauer t1, die der Periodendauer entspricht, mit der das Sendesignal 103 ausgesendet wird. Die analoge Echokurve A wird dem Mischer 308, Korrelator 308 oder Abtaster 308 zugeführt, wo sie mit Hilfe eines Lokaloszillators (LO) 309 so abgetastet wird, dass eine zeitgedehnte analoge Echokurve B entsteht. Zur Erzeugung der zeitgedehnten analogen Echokurve B kann das Verfahren einer sequentiellen Abtastung verwendet werden. Die analoge und zeitgedehnte Echokurve B kann über den Mischerausgang 310 an den Verstärker (Amplifier) 311 weitergereicht werden. Abtaster 308, Lokaloszillator 309 und Verstärker 311 bilden zusammen einen Kern der Empfangseinrichtung der Sende-Empfangseinrichtung 102.

Mit Hilfe des Steuersignals Tx_On wird über die Signalleitung 202 der Transmitter 302 so angesteuert, dass für einen vorgebbaren Ruhebereich das Senden des Sendesignals 103 unterbunden wird. Daraus resultiert in der Empfangskurve A, dass entsprechend dem Einschalten und Ausschalten des Sendesignals entweder periodische Echosignale auftreten oder dass ein typischerweise über mehrere Periodendauern t1 andauerndes Ruhesignal auftritt. Durch die Zeitdehnung im Abtaster 308 ergibt sich eine zeitgedehnte periodische Empfangskurve B, bei der das Ruhesignal aber nun bedingt durch das Zeitdehnungsverfahren nur noch einen Bruchteil der Periodendauer der Empfangskurve B andauert. Das heißt, dass als Ausgang der Verstärkungseinrichtung 311 eine kombinierte Kurve aus der Echokurve und der Offsetkurve über die Verbindung 313 an den Analog-Digital-Wandler 303 bereitgestellt wird. Der Analog-Digital-Wandler 303 kann als eine virtuelle Grenze 314 zwischen einer der Sende-Empfangseinrichtung 102 zugewandten analogen Seite und einer der Offsetbestimmvorrichtung 107 zugewandten digitalen Seite angesehen werden. Der Analog-Digital-Wandler 303 tastet die empfangene zeitgedehnte analoge Reflexionskurve ab, digitalisiert sie und stellt eine diskretisierte Empfangskurve C über die Ausgangsleitung 203 an die Offsetbestimmvorrichtung 107 zur Verfügung. Der Eingang 203 der Offsetbestimmvorrichtung 107 erhält somit zeitgedehnte Abtastwerte des von der Sende-Empfangseinrichtung 102 aufgenommenen Reflexionssignals.

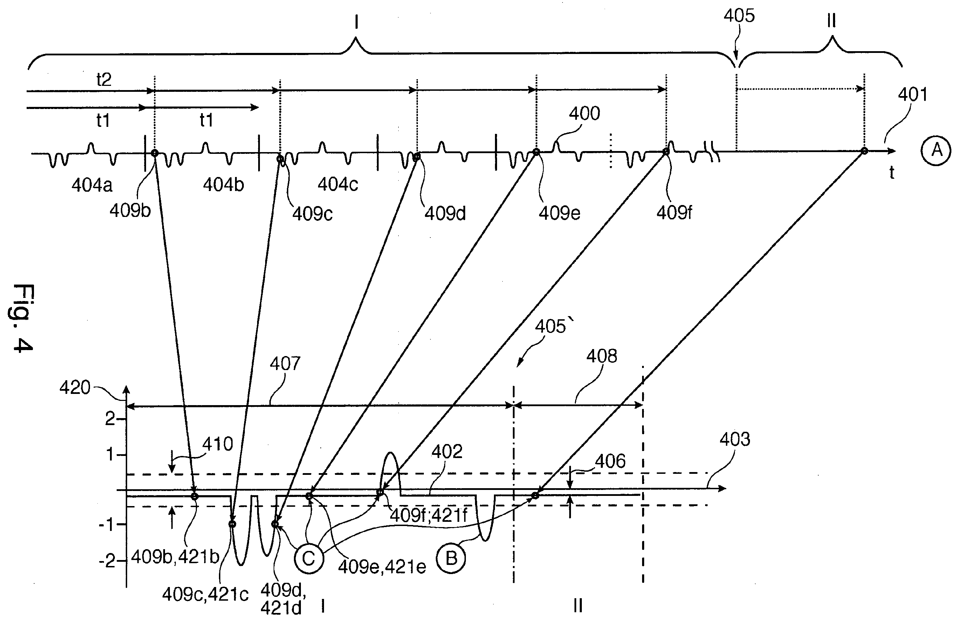

Fig. 4 zeigt mit der Hilfe von Zeitdiagrammen eine schematische Darstellung verschiedener Schritte eines Verfahrens zur Erzeugung von zeitgedehnten Abtastwerten eines Reflexionssignals gemäß einem Ausführungsbeispiel der vorliegenden Erfindung. Es wird dargestellt, wie eine empfangene Reflexionskurve 400, A so aufbereitet werden kann, dass sie zur Bestimmung eines Offsetwerts genutzt werden kann. Durch das periodische Aussenden eines pulsförmigen Sendesignals 103 wird ein entsprechend periodisches analoges Reflexionssignal A, 400 erzeugt. Die Periodizität des Signals entsteht durch das Aneinanderhängen einer vorgebbaren Anzahl an Reflexionssignalen 404a, 404b, 404c, die während eines Beobachtungszeitraumes I oder Messbereichs I empfangen werden. Die erste Periodendauer t1 des Sendesignals 103 erzeugt folglich ein periodisches Reflexionssignal mit einer ersten Periodendauer t1. Das analoge Reflexionssignal A, 400 wird an der mit A in Fig. 3 bezeichneten Stelle hinter der Sende-Empfangstrennung 305 erzeugt. Das analoge Reflexionssignal A ist über der Zeitskala 401 als Abszisse aufgetragen. Aufgrund von schwankenden Füllständen und anderen Einflüssen innerhalb eines Behälters 100 kann die Form eines jeden Echosignals 404a, 404b, 404c innerhalb jeder Periode t1 etwas unterschiedlich sein. Wegen der kurzen Dauer einer einzelnen Periode t1 im Vergleich zur Änderungsdauer eines Füllstandes wird jedoch zumindest über einen gewissen größeren Zeitbereich ein im Wesentlichen konstantes Echosignal durch die Reflexionskurve 400 dargestellt, so dass zumindest angenähert von einem periodischen Signal während des Intervalls I gesprochen werden kann.

Mittels des Mischers 308, der mit einem Lokaloszillator 309 mit der zweiten Periodendauer t2 betrieben wird und der das analoge Reflexionssignal 400 mit dieser zweiten Periodendauer t2 abtastet, wird pro erster Periode t1 genau ein Abtastwert 409b, 409c, 409d, 409e, 409f erzeugt. Da ferner die zweite Periodendauer t2 größer als die Periodendauer t1 ist, wandert pro erster Periode das Abtastsignal an der Reflexionskurve 400 entlang. Zu der Reflexionskurve 404b gibt es den Abtastwert 409b, zu der Reflexionskurve 404c gibt es den Abtastwert 409c, zu der Reflexionskurve 404d gibt es den Abtastwert 409d oder allgemein gibt es zu jeder Reflexionskurve der Dauer der ersten Periode t1 genau einen zugehörigen Abtastwert bis Abtastwerte 409b, 409c, 409d, 409e, 409f für eine ganze Periode t1 erzeugt wurden. Aus den Abtastwerten 409b, 409c, 409d, 409e, 409f, die einen Zeitabstand von t2 aufweisen, wird eine zeitgedehnte analoge Reflexionskurve 402, B oder ein zeitgedehntes Reflexionssignal 402, B rekonstruiert. Beispielsweise kann solch eine analoge zeitgedehnte Reflexionskurve 402 durch eine Tiefpassfilterung nach der Abtastung entstehen. Die rekonstruierte analoge zeitgedehnte Reflexionskurve steht in Fig. 3 an der mit dem Buchstaben B bezeichneten Stelle hinter dem Korrelator 308 zur Verfügung. Bei der Reflexionskurve 402, B handelt es sich um ein zeitgedehntes Abbild der einzelnen Periodendauern t1 der Messkurve A 404a, 404b, 404c. Die Echokurve B, 402 wird in Fig. 4 in einem Koordinatensystem dargestellt, welches als Abszisse 403 die Zeit t in Millisekunden bzw. die Distanz in Meter darstellt. Die Ordinate 420 erfasst die Amplitudenwerte des Reflexionssignals B, 402 in der Einheit Volt, beispielsweise als elektrische Spannung oder elektrische Feldstärke.

Da es sich bei der analogen Echokurve A um ein periodisches Signal mit im Wesentlichen der Periodendauer t1 handelt und da aus der Kurve A zeitgedehnt die Kurve B erzeugt worden ist, weist das zeitgedehnte analoge Abbild B des Echosignals A ebenfalls einen periodischen Verlauf auf. In anderen Worten mag sich Innerhalb des periodischen Verlaufs der analogen Echokurve A ein Messbereich I bestimmen lassen, der dadurch gekennzeichnet ist, dass bei einer Abtastung mit der zweiten Periodendauer t2 innerhalb des Messbereichs I der Kurve B im Wesentlichen ein Kurvenverlauf einer Einzelkurve 404a, 404b, 404c als zeitgedehnte Kurve B dargestellt ist. Aufgrund der Periodizität würde sich der Messbereich I periodisch wiederholen, falls nicht mittels der Steuereinrichtung 206 der Ruhebereich II erzeugt werden würde. Die Echokurve B weist eine Periodendauer auf, die die Zeitdauer des Messbereichs I und die Zeitdauer des Ruhebereichs II enthält. In Fig. 4 ist nur eine einzige Periode des periodischen Signals B, 402 dargestellt, da das Signal zyklisch überschrieben wird, um eine Darstellung auf einem Bildschirm, um die Speicherung in einer Speichereinrichtung oder um eine Auswertung zu ermöglichen.

Die Offsetbestimmungsvorrichtung 107 sieht vor, dass nach Ablauf des Messbereichs I oder des Messintervalls I, also nach einer vorgebbaren Anzahl an ersten Periodendauern t1, zu dem Zeitpunkt 405 ein Abschaltsignal zum Abschalten des periodisch sendenden Transmitters 302 erzeugt wird. In der zeitgedehnten Echokurve 402 stellt sich die Grenze 405 als transformierte Grenze 405' dar. Da die Abschaltung in einem Beispiel periodisch erfolgt, kann das resultierende Signal, das sieh aus den Bereichen I und II zusammensetzt ebenfalls als periodisches Signal bezeichnet werden. Die Anzahl der Perioden, nach denen der Transmitter 302 abgeschaltet wird, hängt von dem zu erfassenden Abtastbereich ab. Der zu erfassende Abtastbereich ist von dem Messbereich I abhängig und kann beispielsweise in Bezug zu der Behälterhöhe stehen.

Durch die Unterbrechung des Senders 302 wird ein Ruhebereich II erzeugt, währenddessen im Wesentlichen kein Reflexionssignal empfangen werden kann. Die Zeitdauer oder die Länge des Ruhebereichs II wird dabei so bestimmt, dass während dieser Zeit im Wesentlichen alle vorhandenen Echos abgeklungen sind. Die Dauer des Ruhebereichs II mag so gewählt werden, dass beispielsweise ein Bereich von 1 m erfasst wird. So mag die Anzahl der für den Ruhebereich II abzuwartenden Periodendauern mit jeweils der Dauer t1 bestimmt werden können. Bei der Berechnung der abzuwartenden Periodendauern t1 kann der Ruhebereich II als ein geradzahliges Vielfaches der ersten Periodendauer t1 gewählt werden. Der Ruhebereich II, der sich an den Messbereich I anschließt, unterbricht künstlich das eigentlich periodische Signal A. Das Signal A kann daher im Wesentlichen nur in dem Messbereich I als periodisch betrachtet werden. Trotzdem wird die sequentielle Abtastung auf das gesamte Signal A angewendet, also auf den Messbereich I und den Ruhebereich II.

Die Signalwerte, welche innerhalb des Ruhebereichs II empfangen werden und von dem Normal-Wert abweichen, rühren im Wesentlichen von Störeinflüssen her und bestimmen einen Offset 406 oder einen Amplitudenoffset 406. Der Offset 406 bewirkt eine Abweichung des Signalwerts der analogen zeitgedehnten Kurve B zu einem Normal-Wert, insbesondere auch in dem Ruhebereich II. Der Normal-Wert ist im Beispiel der Fig. 4 als die Abszisse 403, Normal-Wert 403 oder Nullamplitudenwert 403 angenommen. Das Kombinationssignal, welches aus dem Messbereich I und dem Ruhebereich II zusammengesetzt ist kann in einem Beispiel als ein Signal mit einem periodischen Verlauf betrachtet werden, da der Ruhebereich II im Wesentlichen immer zur gleichen Zeit das periodische Signal unterbricht. Ebenso ist das Kombinationssignal der Echokurve 407 und Offsetkurve 408 periodisch. Der Ruhebereich II sollte nicht den gesamten Bereich abdecken, der nicht als Messbereich genutzt werden soll. Im Hinblick auf den Energiebedarf sollte darauf geachtet werden, dass für den Ruhebereich II nur so viel Zeit vorgesehen ist wie nötig, um ausreichend Zeit für die Bestimmung des Offsetwerts zu haben. Der Ruhebereich II kann relativ kurz gewählt werden, z.B. entsprechend einer Strecke von Im. Zwischen dem Ruhebereich II und dem Beginn eines neuen Messbereichs I würde sich dann ein Standby-Bereich III ergeben, in dem zur Energieeinsparung sowohl Sendeteil 302 einer Sende-Empfangseinrichtung 102, Empfangsteil einer Sende-Empfangseinrichtung und der AD-Wandler 303 deaktiviert werden können. Die der ungedehnten Periodendauer t1 entsprechende gedehnte Periodendauer wäre dann die Zeitdauer der Bereiche I+II+III.

Innerhalb des Messbereichs I wird die Echokurve 407 erfasst, während innerhalb des Ruhebereichs II die Offsetkurve 408 erfasst wird, die im Wesentlichen nur die Höhe des Offsetwerts 406 darstellt. Die zeitgedehnte analoge Echokurve B wird durch den Mischer 308 aus Abtastwerten der Kurve A erzeugt. Bei dieser Wandlung werden die Abtastwerte der Kurve A durch eine nachfolgende Tiefpassfilterung wieder in eine analoge Kurve B gewandelt. Erst der Analog/Digital-Wandler 303 bestimmt die zeitgedehnten Abtastwerte 421b, 421 c, 421 d, 421 e, 421 f der abgetasteten Kurve C, wobei in Fig. 4 der Einfachheit halber die Abtastwerte 421 b, 421 c, 421d, 421e, 421f mit den Abtastwerten 409b, 409c, 409d, 409e, 409f übereinstimmen. Die Zeitdauer t2 ist somit in Fig. 4 als mit t3 übereinstimmend angenommen. Im Fall, dass t2 und t3 nicht übereinstimmen, werden die Abtastwerte 421 b, 421 c, 421 d, 421e, 421f der abgetasteten zeitgedehnten Echokurve C durch das Abtasten oder Digitalisieren der Echokurve 407 und/oder der Offsetkurve 408 mit einer dritten Periodendauer t3 erzeugt. Somit bilden die von dem A/D Wandler erzeugten Abtastwerte 421b, 421c, 421 d, 421 e, 421 f die abgetastete zeitgedehnte Echokurve C mit den zeitgedehnten Abtastwerten 421b, 421c, 421 d, 421e, 421fdes Reflexionssignals, die als Stützwerte einen Abstand von t3 aufweisen. Die diskrete Kurve C der zeitgedehnten Abtastwerte 421b, 421 c, 421 d, 421 e, 421 f des Reflexionssignals C kann der Offsetbestimmvorrichtung 107 zur weiteren Verarbeitung bereitgestellt werden.

In Fig. 4 ist auch durch parallel zu der Abszisse 403 verlaufende und gestrichelte Linien der Regelbereich 410 dargestellt. Der Regelbereich 410 beschreibt einen Toleranzbereich für den Offset. Befindet sich der Offset innerhalb dieser Toleranz, ist davon auszugehen, dass im Wesentlichen keine Begrenzungseffekte auf die Echokurve einwirken. Begrenzungseffekte treten dann auf, wenn die Amplitudenwerte der Echokurve zeitweise den Spannungsbereich verlassen, innerhalb dessen bestimmte Hardwarekomponenten ihren spezifizierten Arbeitsbereich besitzen. Der AD-Wandler 303 kann beispielsweise nur für Eingangssignale innerhalb eines bestimmten Eingangsspannungsbereichs gültige Digitalwerte erzeugen. Liegen Amplitudenwerte der Echokurve zeitweise außerhalb dieses Spannungsbereichs, so tritt für diese Zeit eine Signalbegrenzung ein, die das Echosignal an dieser Stelle verfälscht. Eine zu starke Offsetverschiebung der Echokurve kann somit leicht zu einer Signalbegrenzung führen und muss aus diesem Grund vermieden werden.. Würde sich der ermittelte Offset außerhalb des Regelbereichs befinden, müsste eine geeignete Maßnahme ergriffen werden, um dies zu korrigieren. Diese Maßnahme könnte eine Einstellung von Hardwarekomponenten sein, beispielsweise eine Änderung der Einstellung des Stellglieds 301, welches über den Verstärker 311 den Offset korrigieren kann.

Bei der analogen zeitgedehnten Echokurve B und der diskreten zeitgedehnten Echokurve C handelt es sich wiederum um ein periodisches Signal, wobei sich mit fortlaufender Zeit immer wieder ein Messbereich I oder eine Echokurve 407 und ein Ruhebereich II oder eine Offsetkurve 408 in abwechselnder Anordnung aneinander reihen. Die Grenzen 405', 405 zwischen dem Messbereich I und Reflexionsbereich II können mit einer Deaktivierungseinrichtung 214 beliebig variiert werden. Die Offsetbestimmvorrichtung 107 kann beispielsweise das Ende des Messbereichs I erkennen, indem eine eingestellte Behälterhöhe h mit einem entsprechenden Laufzeitwert oder einem Distanzwert übereinstimmt. Die Grenze 405 zwischen dem Echobereich I und dem Ruhebereich II kann durch Parametrierung, dem Setzen von Parametern also, durch den Anwender mittels einer Einstelleinrichtung erfolgen. Bei der Parametrierung wird der Messbereich I fest vorgegeben. In einem anderen Beispiel können die Grenzen durch die Berechnung aus der in einer Offsetbestimmvorrichtung 107 eingegebenen Behälterhöhe h ermittelt werden. Diese Berechnung kann beispielsweise vorsehen, dass die Grenze 405 bei einer Entfernung liegt, die das 1,5 fache der Behälterhöhe h entspricht oder die der Behälterhöhe zuzüglich 3 m entspricht.

Bei dem vorgeschlagenen Verfahren mag es jederzeit möglich sein, beispielsweise mittels einer Deaktivierungseinrichtung 214 oder einer Steuereinrichtung 206, den Offset der Echokurve in dem gleichen Abtastvorgang wie das eigentliche Messsignal 407, I zu bestimmen, d.h. während der akkumulierten Periodendauer aus den Periodendauern der Echokurve I und der Ruhekurve II.

Für das Bestimmen des Offsets wird nach der Erfassung der Echokurve I der Sender 302 deaktiviert und noch ein kurzer Bereich II für die Offsetbestimmung erfasst. Bei einer Realisierung des Umschaltens kann die Anzahl der Abtastwerte oder die Anzahl der Punkte erfasst werden. Unmittelbar nachdem die Anzahl der Punkte erfasst worden ist, welche dem Abtastbereich 407 entsprechen, und der Sender 302 deaktiviert ist, kann mit der Abtastung der Offsetkurve 408 begonnen werden. Mindestens ein einziger Abtastpunkt des A/D-Wandlers 303 würde für die Bestimmung des Offsetwerts genügen. Um den Bereich II noch ausreichend kurz zu gestalten können auch mehrere, beispielsweise bis zur 200 Punkte, erfasst werden. Diese 200 Abtastwerte des Ruhebereichs II können ca. 1-2 m auf einer Ortsskala im zeitgedehnten Bereich entsprechen. Da nur die in diesem kurzen Bereich II erfassten wenigen Abtastwerte gespeichert werden müssen, mag der Speicherbedarf für die Offsetbestimmung im Vergleich zur Speicherung einer kompletten Kurve nur ein Bruchteil des Speicherbereichs betragen, welchen die komplette Kurve benötigen würde.

Durch die Möglichkeit das Referenzsignal für die Offsetkompensation jederzeit, beispielsweise mittels der Deaktivierungseinrichtung 214 bestimmen zu können, kann man Einflüsse durch evtl. Veränderungen oder Offsetverschiebungen der Echokurve 402 und des Referenzsignals durch Temperatur, Bauteilalterung oder andere physikalische Größen (EMV) vermeiden. Die Echokurve B 402 kann auch als ZF-Signal (Zwischenfrequenzsignal) bezeichnet werden, da ihre Frequenz geringer als die des ursprünglich empfangenen HF-Signals 400 ist.

Beeinflussungen des Bereichs II, in welchem der Offsetkorrekturwert bestimmt wird, z.B. durch Vielfachechos in hohen schlanken Behältern, können durch die Abtastung des Offsetsignals bei deaktiviertem Sender im Wesentlichen ausgeschlossen werden. In schlanken Behältern kann es sehr lange dauern bis sich Vielfachechos totlaufen. Würde in solchen Behältern der Bereich am Ende der Echokurve oder am Beginn der nächsten Echokurve zur Offsetbestimmung verwendet werden, kann es sein, dass diese Bestimmung durch Vielfachechos verfälscht würde.

Ferner mag der Offset durch ein Stellglied 301 und/oder durch eine digitale Korrektur in der Offsetkorrektureinrichtung 209 korrigiert werden. Die Korrektur durch das Stellglied 301 wirkt sich erst auf die nächste abgetastete Kurve C aus, weshalb die momentane Kurve noch "offsetbehaftet" sein kann. Diese erste Korrektur wirkt sich also erst auf die Echokurve C aus, welche als nächstes durch den A/D-Wandler 303 abgetastet wird. Durch die kontinuierliche Bestimmung des Offsetwerts kann zudem per Software in dem Prozessor 107 der auf der Echokurve momentan vorhandene Offset durch eine Berechnungsvorschrift oder durch digitale Signalverarbeitung korrigiert werden, beispielsweise durch eine Addition bzw. durch eine Subtraktion des Offsetwerts. Diese zweite Korrektur kann in der Offsetkorrektureinrichtung 209 stattfinden. Die digitale Signalverarbeitung ist möglich, da die Kurve C als Kurve diskreter Werte vorliegt, die der digitalen Signalverarbeitung zugänglich sind. Das Stellglied 301 sorgt für die erste analoge Korrektur auf der analogen Seite und der Prozessor 107 sorgt für die zweite digitale Korrektur auf der digitalen Seite des A/D-Wandlers 303. Die Berechnung bei der digitalen Signalverarbeitung mag zu einer verzögerten Bereitstellung des Messergebnisses führen.

Für die Bestimmung des Messwerts wird eine Echokurve benötigt. Die Erfassung bzw. Abtastung der von der Sende-Empfangseinrichtung 102 erzeugten Echokurve 404a, 404b, 404c wird von einem Mikroprozessor µC 107 initiiert. Über diesen µC 107 wird die Ansteuerung der Sende-Empfangseinrichtung 102, des A/D-Wandlers 303 oder der Abtasteinrichtung 303 und des digitalen Potentiometers 301 zur Offsetreglung vorgenommen.

Der µC 107 bestimmt die Anzahl der aufgenommenen Abtastpunkte. Wurde vom µC 107, insbesondere von der Steuereinrichtung 206, die erforderliche Distanz erfasst, d.h. wurde die vorgebbare Anzahl der Abtastpunkte erfasst, so wird von dem µC 107 der Transmitter 302 deaktiviert und es wird sofort mit der Abtastung des Offsetsignals begonnen. Für die Digitalisierung des Offsetbereichs II wird nur ein kurzer Bereich II des analogen Signals B abgetastet. In einem Beispiel werden 200 Abtastwerte generiert. Die Anzahl der zu speichernden Abtastwerte ist damit geringer als wenn eine komplette Echokurve über den Messbereich abgespeichert würde, beispielsweise wenn eine komplette Referenzkurve gespeichert werden müsste. Für die beispielsweise 200 Punkte oder 200 Abtastwerte ist im Vergleich zu den bei der Digitalisierung einer Echokurve anfallenden Abtastwerten nur ein geringer Speicherplatz oder ein Speicherbaustein 304 von geringer Kapazität notwendig.

Aus den Abtastwerten der Offsetkurve wird durch Bildung des Mittelwerts, beispielsweise des arithmetischen Mittelwerts, innerhalb der Offsetbestimmvorrichtung 208 die Größe des Offsets der Echokurve bestimmt.

Das Stellglied 301 mit welchem der Ruhepegel der analogen Echokurve B beeinflusst werden kann, kann durch ein digitales Potentiometer ausgeführt werden. Über die Leitung 320 wird ein Korrekturwert an den Verstärker 311 weitergeleitet. Der Verstärker 311 kann als Differenzverstärker realisiert sein. Das Stellglied 301 kann auch als digitales Stellglied mit einem D/A-Wandler (Digital / Analog Wandler) realisiert werden. Der D/A Wandler 301 mag die Regelspannung direkt erzeugen und keinen zusätzlichen Spannungsteiler benötigen. Eine weitere Möglichkeit das Stellglied 301 auszuführen, wäre die Erzeugung eines PWM-Signals (Puls-Weiten-Moduliertes-Signal), welches mit Hilfe eines RC-Glieds in eine Geleichspannung umgesetzt wird. Die Gleichspannung dient dann als Regelspannung.

Sollte keine Regelung des Ruhepegels mit Hilfe eines digital angesteuerten analogen Stellglieds 301 notwendig sein, so könnte man für den Abgleich der Baugruppe auch einen Spannungsteiler 301 oder ein Potentiometer 301 verwenden. Dabei könnte jedoch nicht automatisch auf veränderte Offsetwerte reagiert werden. Diese Stellglieder müssten manuell eingestellt werden. Als Alternative zur teilweise digitalen Regelung mit dem Digitalpotentiometer ist auch eine komplett analoge Regelung vorstellbar, wobei eine analog gemessene Offsetspannung über analoge Verstärker und Regler eine analoge Regelspannung erzeugt.

Für die Messung des Offsets wird die Sende-Empfangseinrichtung 102 abgeschaltet, insbesondere ein Teil 302 der Sende-Empfangseinrichtung 102, der für das Erzeugen des Sendesignals 103 verantwortlich ist, während ein Teil der Sende-Empfangseinrichtung 102, der für das Empfangen zuständig ist aktiv bleibt. Das Abschalten der Sende-Empfangseinrichtung 102 kann mittels des Transmitters 302 erfolgen. Für die Abschaltung des Transmitters 302 sind unterschiedliche Ausführungsmöglichkeiten denkbar. Der Transmitter 302 weist zumindest einen Taktoszillator 502 und einen Impulsgenerator 501 auf.

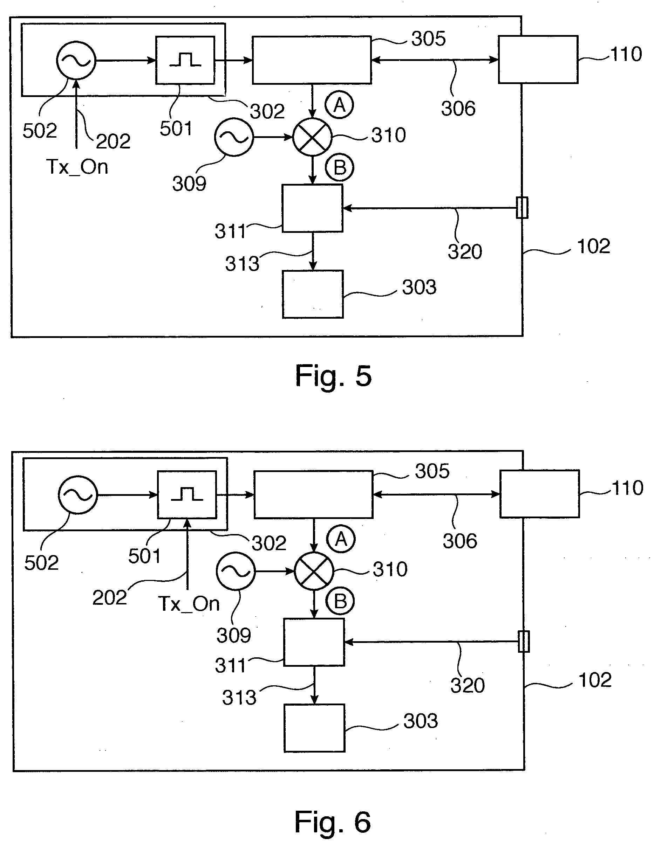

Fig. 5 zeigt das Abschalten des Transmitters 302 mittels Deaktivieren eines Oszillators 502 gemäß einem exemplarischen Ausführungsbeispiel der vorliegenden Erfindung. Hierzu wird der Oszillator 502, welcher den Takt mit der Periodendauer t1 für das Sendesignal 103 erzeugt, mit dem Steuersignal Tx_On angesteuert. Die Leitung 202 ist in diesem Beispiel mit dem Oszillator 502 verbunden und das Signal Tx_On schaltet den Oszillator 502 an oder aus.

Fig. 6 zeigt das Abschalten des Transmitters 302 mittels Deaktivieren des Impulsgenerators 501 gemäß einem exemplarischen Ausführungsbeispiel der vorliegenden Erfindung. Das von dem Oszillator 502 erzeugte Signal wird dem Impulsgenerator 501 als Takt zugeführt, bevor es über die Sende-Empfangstrennung 305 der Antenne 110 zum Aussenden zugeführt wird. Wird der Impulsgenerator 501 abgeschaltet, so wird kein Sendesignal bzw. kein Sendeimpuls mehr erzeugt.

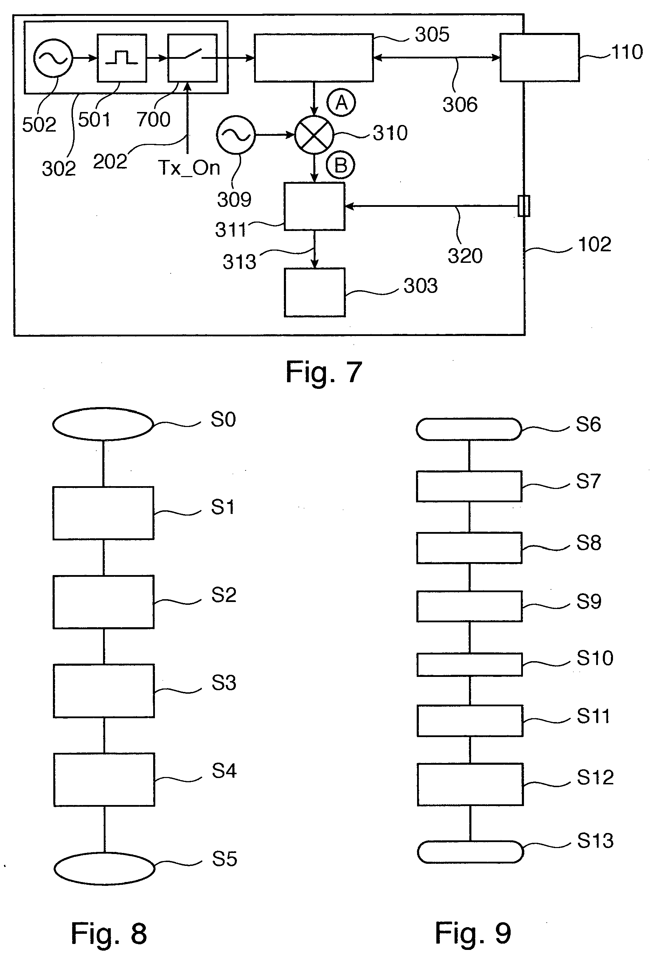

Fig. 7 zeigt das Ausschalten des Transmitters 302 mittels einer Ein-/Ausschalteeinrichtung 700 gemäß einem exemplarischen Ausführungsbeispiel der vorliegenden Erfindung. Der Transmitter 302 weist eine Ein-/Ausschalteeinrichtung 700 zwischen dem Impulsgenerator 501 und der Sende-Empfangstrennung 305 auf. Die Ein-/Ausschalteeinrichtung 700 ist in den Signalweg des Sendeimpulses eingebracht. Die Ein-/Ausschalteeinrichtung 700 oder der Schalter 700 wird von dem Steuersignal Tx_On über die Leitung 202 angesteuert und eingeschaltet oder ausgeschaltet. Bei dieser Anordnung kann der Transmitter 302 deaktiviert werden, indem der Schalter 700 die Verbindung zwischen Impulsgenerator 501 und Sende-/Empfangstrennung 305 öffnet. Der Transmitter 302 wird aktiviert, wenn der Schalter 700 geschlossen wird.

Es sei angemerkt, dass der für das Senden verantwortliche Teil der Sende-Empfangseinrichtung 102 unabhängig von dem für das Empfangen eines Signals verantwortlichen Teil der Sende-Empfangseinrichtung 102 ausgeschaltet werden kann.

In den Figuren 5, 6 und 7 schließt die Sende-Empfangseinrichtung 102 den AD-Wandler 303 mit ein, während in Fig. 3 der AD-Wandler 303 außerhalb der Sende-Empfangseinrichtung liegt. Der AD-Wandler 303 kann also in der Sende-Empfangseinrichtung 102 integriert sein oder extern zu der Sende-Empfangseinrichtung 102 angeordnet sein.

Die Fig. 8 zeigt ein Flußdiagramm des Ablaufs der Offsetkorrektur. Fig. 8 zeigt daher ein Flussdiagramm für ein Verfahren zur Bestimmung eines Offsets gemäß einem Ausführungsbeispiel der vorliegenden Erfindung. Das Verfahren beginnt im Schritt S0 und im Schritt S1 werden zeitgedehnte Abtastwerte eines Reflexionssignals eines Sendesignals empfangen, welches vor dem Empfangen mit einer ersten Periodendauer t1 von einer Sende-Empfangseinrichtung 102 ausgesendet worden ist.

Im Schritt S2 wird ein Ende des Messbereichs I der Echokurve 407 erkannt. Es wird außerhalb des Messbereichs I der zeitgedehnten Abtastwerte 407, d.h. nachdem die für den Messbereich I vorgesehene Anzahl an Abtastwerten erfasst worden ist, ein Abschaltesignal Tx_On an die Sende-Empfangseinrichtung 102 bereitgestellt, welches das Aussenden des Sendesignals 103 zumindest zeitweise deaktivieren kann, um einen vorgebbaren Ruhebereich II innerhalb der zeitgedehnten Abtastwerte des Reflexionssignals 402 zu erzeugen. Die Zeitdauer der Bereitstellung des Abschaltsignals Tx_On kann fest vorgegeben sein oder mittels der Steuereinrichtung 206 für die Zeitdauer des Abschaltsignals variabel eingestellt werden. Die Dauer des Abschaltens mag lange genug sein, um sicherzustellen, dass die Dauer des Ruhebereichs II solange andauert, um ausreichend Abtastwerte zu sampeln. D.h. falls eine geringere Abtastrate 1/t3 des D/A-Wandlers 303 verwendet wird, wird der Ruhebereich II länger sein als wenn eine hohe Abtastrate verwendet wird, damit die gleiche Anzahl an Abtastwerten eingelesen werden kann.

In anderen Worten wird bei aktiviertem Transmitter 302 mit Hilfe des A/D-Wandlers 303 die analoge Echokurve B digitalisiert und in ein entsprechendes digitales Abbild C überführt.

Wurde vom µC 107 die erforderliche Distanz des Messbereichs I erfasst, so wird von diesem der Transmitter 302 deaktiviert und es wird sofort mit der Abtastung des Offsetsignals 408 begonnen. Die erforderliche Distanz des Messbereichs I wird beispielsweise anhand der Anzahl der Abtastpunkte festgelegt. Für die Abtastung des Offsetsignals 408 wird nur ein kurzer Bereich II des analogen Signals abgetastet, beispielsweise 200 Abtastwerte.

Im Schritt S3 wird der Wert eines Offsets 406 innerhalb des Ruhebereichs II als Abweichung von einem Normal-Wert 403 bestimmt. Für diese Offsetbestimmung wird, z.B. aus den Abtastwerten der Offsetkurve 408 durch Bildung des arithmetischen Mittelwerts einer Teilgruppe der Abtastwerte aus dem Ruhebereich II oder aller Abtastwerte, die Größe des Offsets der gesamten Echokurve bestimmt, die sich aus der Echokurve 407 und der Offsetkurve 408 zusammensetzt. Für die Korrektur des Offsets der gesamten Echokurve wird angenommen, dass der gleiche Offset, der für die Offsetkurve 408 bestimmt wurde, auch für die Echokurve 407 wirksam war oder ist.

Im Schritt S4 wird der Offsetwert, eine von dem Offsetwert abgeleitete Kenngröße oder ein davon abgeleitetes Signal bereitgestellt, bevor das Verfahren den Endzustand S5 erreicht hat.

Die Fig. 9 zeigt ein weiteres Flussdiagramm eines Verfahrens zum Bestimmen eines Offsets gemäß einem Ausführungsbeispiel der vorliegenden Erfindung.

Dieses weitere Verfahren beginnt mit dem Schritt S6, der einen Ausgangszustand darstellt. Im Schritt S7 wird die Echokurve erzeugt, welche für die Bestimmung des Messwerts, beispielsweise der Füllstandhöhe, benutzt wird. Zur Erzeugung der Echokurve wird von der Antenne 110 oder der Einkoppeleinrichtung 110' ein gepulstes Sendesignal 103, 103' ausgesendet und mittels der Sende-Empfangstrennung 305 eine davon erzeugte Echokurve A erfasst. Die Abtastung wird von der Abtaststeuereinrichtung 206 in der Offsetbestimmvorrichtung 107 initiiert, welche als Prozessor 107 oder Mikrocontroller 107 realisiert sein kann. Die Abtaststeuereinrichtung 206 oder Steuereinrichtung 206 in der Offsetbestimmvorrichtung 107 steuert auch die Abtasteinrichtung 303 an, die als A/D-Wandler 303 ausgeführt sein kann. Mittels der Verbindungsleitung 201 steuert die Offsetbereitstelleinrichtung 208 das Stellglied 301, beispielsweise ein digitales Potentiometer, und erlaubt so eine Offsetregelung zu realisieren.

Es wird bei aktivem Sender 102 oder aktiver Sende-Empfangseinrichtung 102 mit Hilfe des Mischers 308 ein zeitgedehntes Signal B aus der Echokurve A gebildet. Das zeitgedehnte Signal B oder die Echokurve B wird dann mittels A/D-Wandler 303 in ein digitales Abbild C umgesetzt, d. h. in die zeitgedehnten Abtastwerte 421b, 421 c, 421d, 421 e der digitalen Echokurve C.

Im Schritt S8 wird von der Offsetbestimmvorrichtung 107 festgestellt, ob die erforderliche Distanz des Messbereichs I erfasst wurde. Es wird folglich festgestellt, ob eine vorgebbare Anzahl an Abtastpunkten 421b, 421 c, 421d, welche die digitale Echokurve C innerhalb des Messbereichs I ausreichend beschreiben, von der Offsetbestimmvorrichtung 107 erfasst wurden. Wird festgestellt, dass der gesamte interessierende Messbereich I, d. h. eine komplette Echokurve 407 oder eine vollständige Echokurve 407 aufgenommen worden ist, so wird im Schritt S8 der Transmitter 302 über das Abschaltsignal Tx_On in der Leitung 202 deaktiviert. Die Deaktivierung hat zur Folge, dass das sonst mit der ersten Periodendauer t1 ausgesandte Sendesignal nicht mehr gesendet wird, wobei aber der Empfangsteil der Sende-Empfangseinrichtung 102 eingeschaltet bleibt, so dass sich nach einem Messbereich I zum Abschaltzeitpunkt 405 ein Ruhebereich II ausformt. In diesem Ruhebereich II werden lediglich Signale empfangen, welche nicht auf das Aussenden eines Sendesignals 103 zurückzuführen sind. Da der Transmitter 302 der Sende-Empfangseinrichtung 102 abgeschaltet ist, jedoch der Empfangsteil der Sende-Empfangseinrichtung 102 trotz abgeschaltetem Transmitter 302 aktiv ist, wird in dem Ruhebereich II lediglich die Auswirkung von Störgrößen auf den Empfangsteil der Sende-Empfangseinrichtung 102 erfasst.

Unmittelbar an den Abschaltzeitpunkt 405, der sich auf die Grenze 405' zwischen Echokurve 407 und Offsetkurve 408 transformiert, kann im Schritt S9 mit der Abtastung der Offsetkurve 408 begonnen werden, also mit dem Auswerten von Abtastwerten innerhalb des Ruhebereichs II. Somit wird das Offsetsignal oder die Offsetkurve 408 im Wesentlichen sofort nach dem Messbereich I abgetastet. Die Offsetbestimmvorrichtung 107 weist die Deaktivierungseinrichtung 214 auf, mit der ein sofortiger Stopp des Sendesignals 103, 103' erreicht werden kann. Durch das Anwenden der Deaktivierungseinrichtung 214 lässt sich die Grenze 405, 405' verschieben

Für die Bestimmung des Offsetwerts wird nur ein kurzer Bereich 408 der Echokurve 402 abgetastet. Dieser kurze Bereich 408 oder die Offsetkurve 408, insbesondere die Signalwerte der analogen Echokurve B, welche in den Ruhebereich II fallen, werden mit relativ wenig Abtastwerten abgetastet. Somit kann der Ruhebereich II oder der Teil des Ruhebereichs II, der für die Bestimmung des Offsets genutzt wird, relativ gering ausfallen. In dem Bereich, der für die Auswertung genutzt wird, können durch das Abschalten des Sendesignals die vorhandenen Signale im Wesentlichen auf die Signale reduziert werden, die für die Störung des korrekten Empfangs der Echokurve verantwortlich sind. Es muss folglich zum Bestimmen des Offsetwerts nicht eine komplette Referenzkurve des Echosignals, beispielsweise eine gesamte Echokurve des Messbereichs 407, für einen leeren Behälter abgespeichert werden. Es reicht die Abtastung mit relativ wenigen Abtastschritten aus. Beispielsweise genügt es 200 Abtastwerte abzuspeichern, um den Offsetwert zu bestimmen. Folglich kann auch ein Speicher 304 der Offsetbestimmeinrichtung 107 gering ausfallen.

Aus den Abtastwerten der diskreten Echokurve C, welche in den Ruhebereich II fallen, also aus den Abtastwerten der Offsetkurve 408, kann durch Bildung des arithmetischen Mittelwerts die Größe des durchschnittlichen Offsets der Echokurve bestimmt werden. Dieser Offsetwert kann zur Korrektur der Echokurve auf verschiedene Art und Weise genutzt werden. Die Berechnung des Offsets durch Mittelwertbildung wird im Schritt S 10 durchgeführt.

Im Schritt S11 kann der aus dem berechneten Offsetwert ermittelte Korrekturwert ausgegeben werden, beispielsweise über den Ausgang 210a der Offsetbereitstelleinrichtung 208.

Im Schritt S12 kann der ermittelte Korrekturwert oder der Offsetwert genutzt werden, um die Echokurve C um den Wert des Offsets zu korrigieren. Diese Korrektur der Echokurve um den Offset kann auf analoger Seite der Messvorrichtung 109 und/oder auf der digitalen Seite der Messvorrichtung 109 erfolgen, d. h. vor der Analogwandlung mittels A/D-Wandlers 303 und/oder danach.

Die Feedbackleitung 201 zusammen mit dem Stellglied 301 und der Rückführungsleitung 320, welche an einem zweiten Ausgang des Verstärkers 311 zugeführt wird, kann eine Offsetregelung, eine Offsetsteuerung oder eine Offsetregelschleife realisieren. Über das Stellglied 301 dieser Offsetregelung wird der Ruhepegel der analogen Echokurve B verschoben, wodurch sich auch die abgetastete Echokurve C verschiebt. Der Ruhepegel sollte für die Ermittlung des Messwerts im Wesentlichen dem Normal-Wert entsprechen, da in diesem Fall die Detektionskurve oder Schwellwertkurve sehr nahe an die Echokurve gelegt werden kann. Mittels des Stellglieds 301 kann die analoge Echokurve B so nahe wie möglich auf den Normal-Wert 403 oder den Nullamplitudenwert 403 verschoben werden. Durch das Annähern der Echokurve B an die Normal-Wert-Kurve 403 kann an dem Ausgang des Verstärkers 311 eine analoge Echokurve B bereitgestellt werden, bei der keine oder nur noch eine geringe Offsetkorrektur auf der digitalen Seite nötig ist. Weiterhin kann durch das Stellglied 301 verhindert werden, dass sich die Echokurve B zu weit von ihrem Soll-Ruhepegel entfernt, wodurch es zu Begrenzungseffekten kommen kann, welche zu Messfehlern führen könnten. Würde sich die analoge Echokurve B zu weit von dem Soll-Ruhepegel, d. h. von dem Normal-Wert 403 entfernen, könnte die Echokurve B aus einem zulässigen Eingangserfassungsbereich für Amplitudenwerte des Analog/Digital-Wandlers geschoben und dadurch abgeschnitten werden. Das Abschneiden, das Kappen, das Deckeln oder das Begrenzen der Echokurve B würde "rechteckförmige" Echoverläufe erzeugen und eine Bestimmung des Maximums eines Echos wäre nicht mehr exakt möglich. Die Offsetkorrektur kann diese Bereichsüberschreitung verhindern.

Die Echokurve, welche in dem gleichen Abtastvorgang wie der Offsetwert bestimmt wurde, kann aber nach wie vor einen geringen Offset enthalten und deshalb immer noch verschoben sein. In anderen Worten kann trotz des Korrigierens des Offsets auf der analogen Seite immer noch eine Offsetverschiebung vorhanden sein, da die Bestimmung eines Offsets erst auf nachfolgende Signale wirken kann. Die Echokurve, welche in dem gleichen Abtastvorgang wie der Offsetwert bestimmt wurde, wurde nämlich zeitlich vor der Bestimmung des Offsetwerts erfasst und wird somit von der Rückführung des Offsetkorrekturwerts über das Stellglied nicht mehr betroffen.

Unter dem Begriff "gleicher Abtastvorgang" ist der folgende Sachverhalt zu verstehen. Wenn man die zeitgedehnten Echosignale B bzw. C als periodische Signale auffasst, die jeweils einen Messbereich I und einen Ruhebereich II als zusammengefasste Periodendauer aufweisen, bedeutet der Begriff des gleichen Abtastvorgangs, dass sämtliche Abtastwerte innerhalb derselben zusammengefassten Periodendauer der Bereiche I und II liegen. Somit zeigt die zeitgedehnte Echokurve 402 der Fig. 4 eine gesamte Echokurve mit der aus der Periodendauer der Echokurve 407 und der Periodendauer der Offsetkurve 408 zusammengesetzten Periodendauer aus dem gleichen Abtastvorgang, in dem auch ein Offsetwert bestimmt wird. Die Echokurve 402, insbesondere die Offsetkurve 408, welche zur Bestimmung des Offsets herangezogen wurde enthält noch den Offset. Dieser wird jetzt zwar per Hardware für die nachfolgenden Kurven korrigiert, damit die aktuelle Kurve aber auch nahezu offsetfrei wird, muss diese noch rechnerisch korrigiert werden.

Das Verfahren endet schließlich in dem Schritt S13.

Das beschriebene Verfahren ermöglicht es, dass der Offsetwert, der im vorangegangenen Schritt bestimmt wurde, genutzt werden kann, um die aktuelle Kurve zu korrigieren. Die Bestimmung eines Offsetwerts wirkt sich auf der analogen Seite erst auf die nächste zeitgedehnte Echokurve aus. Eine in einem Speicher befindliche digitale Echokurve kann durch einen danach bestimmten Offsetwert korrigiert werden, bevor der Messwert bereitgestellt wird. Indem der Offsetwert je nach Vorzeichen von der Echokurve C, 421b, 421c, 421d, 421e-subtrahiert bzw. addiert wird, kann nach der Offsetkorrektureinrichtung 209, also nach dem Korrigieren des Offsets, eine Echokurve bereitgestellt werden, die im Wesentlichen offsetfrei ist. Durch die parallele Anwendung einer analogen Offsetkorrektur und einer digitalen Offsetkorrektur kann somit der Mittelungseinrichtung 211 und der Messwertbestimmeinrichtung 212 eine nahezu offsetfreie Echokurve zur Messwertbestimmung zugeführt werden. Die Echokurve, die der Mittelungseinrichtung 211 oder Mitteleinrichtung 211 zur Verfügung gestellt wird, kann, da sie im Wesentlichen offsetfrei ist, sehr nahe an der Detektionskurve liegen und somit können von der Messwertbestimmvorrichtung 212 auch solche Echos bestimmt werden, welche bei Nutzung einer offsetbehafteten Echokurve nicht mehr sichtbar oder detektierbar wären.

Durch die Möglichkeit bereits abgetastete Echokurven C nachträglich digital oder rechnerisch korrigieren zu können, d. h. mit Hilfe des Einsatzes eines Mikroprozessors 107 zu bearbeiten, kann somit auch vermieden werden, dass das Stellglied 301 der Offsetregelung eine sehr hohe Auflösung aufweisen muss. In anderen Worten bedeutet das, dass die analoge Korrektur des Offsets nur mit der Genauigkeit bzw. Auflösung des Stellglieds 301 durchgeführt werden kann, beispielsweise der Auflösung des Digitalpotentiometers. Nur wenn der Offset genau dieser Auflösung oder einem Vielfachen davon entspricht, kann so der Offset völlig korrigiert bzw. entfernt werden. In allen andern Fällen bleibt nach der Korrektur über das Stellglied 301 ein Restoffset bestehen, welcher nur noch rechnerisch korrigiert bzw. entfernt werden kann. Der Restoffset kann jedoch in jedem Fall so gering bemessen werden, dass er innerhalb des Regelbereichs 410 liegt und damit keine Begrenzungseffekte zu befürchten sind.

Die Rückführung 201 des Offsetwertes kann also mit einer geringen Auflösung auskommen. Könnte diese sehr hohe Auflösung des Stellglieds 301 nicht vermieden werden, müsste die Auflösung des Stellglieds mindestens ein halbes LSB (Least Significant Bit) des A/D-Wandlers betragen, damit ein Offset nicht mehr auf der Echokurve feststellbar wäre.

Das beschriebene Verfahren und die beschriebene Vorrichtung kann Einschränkungen gegenüber einer Lösung vermeiden, welche zwei Echokurven nutzt. Einerseits kann eine Lösung mit zwei Echokurven, die den jeweiligen Offset in einem Bereich der Echokurve vor einem Referenzpuls bestimmt und die Offsets der beiden Kurven beim Vergleich der beiden Echokurven berücksichtigt, dazu führen, dass Bereiche vor den Referenzpulsen, in denen der Offset bestimmt wird, Echos enthalten können. Diese Echos können die Offsetbestimmung verfälschen. Andererseits kann sich bei der Lösung, die zwei Echokurven nutzt, auch auswirken, dass einzelne Echokurven immer mit Offset behaftet sind, der zu einer Begrenzung des Echokurvensignals führen kann. Der Offset wird erst beim Vergleich verschiedener Echokurven beseitigt.

Das beschriebene Verfahren ermittelt und eliminiert im Wesentlichen vollständig den Offset jeder einzelnen Echokurve individuell und nutzt dazu im Wesentlichen die im Folgenden beschriebenen Schritte.

Zunächst wird ein Bereich II der Echokurve erzeugt, der zur Ermittlung des Offsets geeignet ist, indem zeitweilig der Sendepuls mit einem Signal "TX_on" deaktiviert wird. Nach der Deaktivierung des Sendepulses wird der Offset innerhalb des oben genannten Bereichs II, 408 ermittelt. Zur weitgehenden Eliminierung des Offsets erfolgt eine Regelung über ein Stellglied 301. Die Wirkung der Regelung ist aufgrund der Rückführung in einem Beispiel zeitlich versetzt. Die Regelung wirkt z.B. erst beim nächsten "Schuss". Die Regelung wirkt somit erst auf eine zweite Echokurve 407, die zeitlich einer ersten Echokurve 407 folgt, wobei aus der ersten Echokurve die Offsetkorrektur der zweiten Echokurve abgeleitet wird. Es kann auch vorkommen, dass ein geringer Offset verbleibt, nachdem eine grobe Eliminierung des Offsets zur Vermeidung der Begrenzung vor der A/D-Wandlung stattgefunden hat. Der Offset, der nach der A/D Wandlung noch übrig geblieben ist wird im nächsten Schritt vollständig eliminiert. Diese Eliminierung kann rechnerisch beispielsweise durch Subtraktion eines konstanten Offsetwerts von allen diskreten Punkten der Echokurve durchgeführt werden.

Als Ergebnis der Korrektur des Offsets ergibt sich beim Abschalten der Sende-Empfangseinrichtung 102 eine Echokurve, die bei im Wesentlichen vollständiger Abwesenheit aller Empfangssignale auf dem erwarteten Ruhewert 403, auf dem Normal-Wert 403 oder auf dem Nullwert 403 über den Zeitverlauf verharrt. Der Ruhewert wird in der resultierenden Echokurve, also in der Echokurve welche nach der Korrektur des Offsets an die Mittelungseinrichtung 211 übergeben wird und welche für die weitere Signalverarbeitung verwendet wird, durch einen bekannten Amplitudenwert bei Abwesenheit aller Signale repräsentiert. Ein bekannter Amplitudenwert kann z.B. der Wert Null sein

Durch die Offsetkorrektur ist jede einzelne Echokurve nach der Offsetkorretureinrichtung 209 im Wesentlichen offsetfrei, wodurch sich Reflexionen oder Echos auch ohne Vergleich mit einer Referenzkurve gut erkennen lassen. Wegen des im Vergleich zu der Abklingdaucr von Echos im Behälter langen Zeitintervalls II, währenddessen der Offset ermittelt wird, kann die Ermittlung des Offsets im Wesentlichen nicht durch Echos gestört werden. Begrenzungseffekte, die beispielsweise durch Offsets entstehen, können vermieden werden. Außerdem kann eine mehrstufige Offset-Eliminierung, beispielsweise eine Aufteilung in eine grobe Offset Eliminierung und eine feine Offset-Eliminierung, durchgeführt werden. Die mehrstufige Offset-Eliminierung kann eine Kombination von analoger Offsetregelung und rechnerischer Offset Korrektur vorsehen. Diese Kombination kann zu Kostenvorteilen führen und den Aufwand für die Realisierung einer guten Offsetkorrektur reduzieren, beispielsweise da Komponenten mit geringen Auflösungen eingesetzt werden können.

Mittels der Deaktivierungseinrichtung 214 ist es möglich sofort, also unmittelbar nach betätigen der Deaktivierungseinrichtung, den Empfangs-Ruhewert oder die Offsetkurve 408 zu beliebigen Zeitpunkten und Zeitintervallen innerhalb der Echokurve durch Deaktivierung des Sendesignals zu erzeugen.

Das Abschalten des Sendesignals und das Erzeugen eines entsprechenden Ruhebereichs im zeitgedehnten Bereich kann auch für weitere Anwendungen genutzt werden. Neben der oben beschriebenen Offset-Eliminierung können Störechos ausgeblendet werden, der Referenzpegel kann für die Bestimmung der Echoamplituden genutzt werden und der Rauschlevel des Empfangs-Eigenrauschens kann bestimmt werden.

Es mag ein weiterer Aspekt der Erfindung sein, dass ein Sender deaktiviert wird, um zu beliebigen Zeitpunkten innerhalb einer Echokurve einen Abschnitt mit Ruhepegeln zu erhalten. Dadurch kann vermieden werden, dass der Empfänger abgeschaltet werden muss und dass interne Unzulänglichkeiten des Empfängers selbst Offset und Rauschen erzeugen. Die erhaltenen Ruhewerte können mit den bekannten Soll-Ruhewerten verglichen werden und aus dem Vergleichsergebnis kann der durch die internen Unzulänglichkeiten vorhandene Offset im Empfangssignal berechnet werden. Durch das Eliminieren des Offsets kann vermieden werden, dass die internen Unzulänglichkeiten dazu führen, dass das Echokurvensignal bei deaktiviertem Sender nicht identisch mit dem gewünschten Soll-Ruhepegel ist. Der Soll-Ruhepegel entspricht dabei dem zu erwartenden Wert bei Abwesenheit aller Reflexionen, bei einer vorgegebenen Randbedingung also.

Das Deaktivieren des Sendesignals würde bei einer Puls-Laufzeit-Messung ohne Zeitdehnung durch "sequential sampling" erst dann zum Ruhepegel führen, wenn alle Reflexionen des letzten Sendepulses abgeklungen sind, die beim Abschalten noch "unterwegs" sind oder sich noch ausbreiten. Dieses Abklingen kann im Vergleich zu der Periodendauer t1 eines einzelnen Reflexionssignals 404a, 404b, 404c ein Vielfaches dieser Periodendauer t1 dauern. In einem Distanzwert ausgedrückt kann das Abklingen viele Meter lang sein.

Die Kombination des Abschalten des Senders und der Einsatz eines Zeitdehnungsverfahrens durch Kreuzkorrelation oder durch "sequential sampling" erlaubt es, dass sich die Deaktivierung des Sendesignals auf der zeitgedehnten Echokurve quasi sofort, beschleunigt um den Zeitdehnungsfaktor, auswirkt. Bei üblichen Zeitdehnungsfaktoren von mehreren Zehntausend werden so aus vielen Metern beispielsweise wenige Millimeter. Wenn in einem Beispiel die Behälterhöhe h 20m beträgt, sind die Reflexionen erst nach 100m in einem nicht zeitgedehnten Massstab genügend abgeklungen, um eine zufriedenstellende Messung des Ruhepegels zu gewährleisten. Der "Abklingbereich" beträgt somit 80m. Für ein Puls-Laufzeit-Verfahren, das keine Zeitdehnung nutzt, müsste in diesem Beispiel in jeder Sende-Empfangsperiode bis 100m gewartet werden bis die Offsetbestimmung erfolgen kann. Bei Nutzung eines Puls-Laufzeit-Verfahrens mit der Zeitdehnungstechnik in Kombination mit dem Abschalten der Sendeeinrichtung im Wesentlichen unmittelbar nachdem die Behälterhöhe h erreicht wurde, verkürzt sich der Abklingbereich von 80m um den beispielhaften Zeitdehnungsfaktor 100.000 auf 0,8mm. Nach der Deaktivierung des Senders muss also nur 0,8 mm abgewartet werden, bis eine zuverlässige Messung des Ruhepegels möglich ist. In der zeitgedehnten Echokurve 402 entspricht beispielsweise 1 ms Laufzeit im Zeitdiagramm 403 der Echokurve ca. 1 m Distanz für Hin- und Rückweg in einer Ortsskala. In der nicht zeitgedehnten Empfangsechokurve 400, die auch als HF-Kurve bezeichnet wird, entspricht die Laufzeit von 1 ms einer zurückgelegten Distanz von ca. 16300 m für Hin- und Rückweg. In anderen Worten mag das bedeuten, dass, falls das Abklingen von Reflexionen nach dem Abschalten 1 ms dauert, in der nicht zeitgedehnten Darstellung einem Wert von 16.300 m entspricht und in der zeitgedehnten Darstellung lediglich 1 m.

Die vorliegende Erfindung ist bei allen Puls-Laufzeit-Verfahren einsetzbar, die die sequential sampling- Zeitdehnungstechnik nutzen.

Ergänzend ist daraufhinzuweisen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messvorrichtung (109) aufweisend:
eine Sende-Empfangseinrichtung (102);
eine Offsetbestimmvorrichtung (107) zur Bestimmung eines Amplitudenoffsets aufweisend:
eine Abtast-Empfangseinrichtung (204) zum Empfangen von zeitgedehnten Abtastwerten (421 b, 421 c, 421 d, 421e) eines Reflexionssignals (C) eines Sendesignals, das periodisch mit einer ersten Periodendauer (t1) von einer Sendeeinrichtung (302) ausgesendet wird;
eine Steuereinrichtung (206) zum Steuern der Sendeeinrichtung (302);
eine Offsetbereitstelleinrichtung (208);
wobei die Steuereinrichtung (206) eingerichtet ist, außerhalb eines vorgebbaren Messzeitbereichs (407, I) der zeitgedehnten Abtastwerte (421b, 421 c, 421d, 421e) eines Reflexionssignals (C) ein Abschaltsignal (TX_on) bereitzustellen, welches die Sendeeinrichtung (302) zumindest zeitweise deaktivieren kann, um einen vorgebbaren Ruhezeitbereich (408, II) innerhalb der zeitgedehnten Abtastwerte (421b, 421c, 421d, 421e) des Reflexionssignals (C) zu erzeugen;
wobei die Offsetbereitstelleinrichtung (208) eingerichtet ist, durch das Auswerten zumindest eines Abtastwerts (421 b, 421 c, 421d, 421e) der zeitgedehnten Abtastwerte, der innerhalb des Ruhezeitbereichs (408, II) ermittelt wird, einen Wert eines Amplitudenoffsets (406) der zeitgedehnten Abtastwerte (421b, 421c, 421d, 421e) des Reflexionssignals (C) von einem Normal-Wert (403) zu bestimmen und diesen Wert des Amplitudenoffsets (406) an einem Ausgang (210a, 210b) der Offsetbereitstelleinrichtung (208) bereitzustellen; wobei die Steuereinrichtung (206) der Offsetbestimmvorrichtung (107) mit der Sende-Empfangseinrichtung (102) verbunden ist.

2. Die Messvorrichtung (109) nach Anspruch 1, wobei der zeitliche Abstand der zeitgedehnten Abtastwerte (421 b, 421c, 421d, 421e) des Reflexionssignals (C) eine zweite Periodendauer (t2) beträgt, wobei die zweite Periodendauer (t2) größer als die erste Periodendauer (t1) ist.

3. Die Messvorrichtung (109) nach Anspruch 1 oder 2, wobei die Dauer des Abschaltsignals (TX_on) einem ganzzahligen Vielfachen der ersten Periodendauer (t1) entspricht.

4. Die Messvorrichtung (109)nach einem der Ansprüche 1 bis 3, wobei der vorgebbare Messzeitbereich (I, 407) von einer Behälterhöhe (h) abhängt.

5. Die Messvorrichtung (109)nach einem der Ansprüche 1 bis 4, wobei der Wert des Amplitudenoffsets (406) der zeitgedehnten Abtastwerte (421b, 421c, 421d, 421e) des Reflexionssignals von dem Normal-Wert (403) aus einer Mittelwertbildung aus einer Vielzahl von innerhalb des Ruhezeitbereichs ermittelten Abtastwerten in der Offsetbereitstelleinrichtung gebildet wird.

6. Die Messvorrichtung (109) nach einem der Ansprüche 1 bis 5, die Offsetbestimmvorrichtung (107) weiter aufweisend:
eine Auswahleinrichtung (205);
wobei die Auswahleinrichtung (205) eingerichtet ist, einen zeitgedehnten Abtastwert (421 b, 421 c, 421d, 421e), der innerhalb des Messzeitbereichs (I, 407) auftritt, an einem ersten Ausgang (207a) der Auswahleinrichtung bereitzustellen und zumindest einen Abtastwert, der innerhalb des Ruhezeitbereichs (II, 408) ermittelt wird, über einen zweiten Ausgang (207b) der Auswahleinrichtung an die Offsetbereitstelleinrichtung (208) bereitzustellen.

7. Die Messvorrichtung (109) nach einem der Ansprüche 1 bis 6, wobei die Offsetbereitstelleinrichtung (208) eingerichtet ist, den Wert der Abweichung der zeitgedehnten Abtastwerte des Reflexionssignals von einem Normal-Wert für eine Amplitudenoffsetkorrektur des Reflexionssignals (B) vor einer Digitalisierung des Reflexionssignals zu nutzen und/oder für eine Amplitudenoffsetkorrektur des Reflexionssignals (C) nach einer Digitalisierung des Reflexionssignals zu nutzen.

8. Die Messvorrichtung (109)nach einem der Ansprüche 1 bis 7, die Offsetbestimmvorrichtung (107) weiter aufweisend:
eine Offsetkorrektureinrichtung (209);
wobei die Offsetkorrektureinrichtung (209) eingerichtet ist, die zeitgedehnten Abtastwerte (421b, 421c, 421d, 421e) des Reflexionssignals korrigiert um den Wert der Abweichung bereitzustellen.

9. Die Messvorrichtung (109) nach einem der Ansprüche 1 bis 8, die Offsetbestimmvorrichtung (107) weiter aufweisend:
eine Deaktivierungseinrichtung (214);
wobei die Deaktivierungseinrichtung (214) eingerichtet ist zu einem beliebigen Zeitpunkt das Abschaltsignal (TX_on) zu senden, beispielsweise auch innerhalb des Messzeitbereichs (407, I).

10. Die Messvorrichtung (109) nach einem der Ansprüche 1 bis 9, wobei die zeitgedehnten Abtastwerte (421b, 421c, 421d, 421e) des Reflexionssignals durch sequentielles Abtasten und/oder durch Digitalisieren erzeugt werden.

11. Die Messvorrichtung (109) nach einem der Ansprüche 1 bis 10, wobei die Messvorrichtung zumindest eine Messvorrichtung ausgewählt aus der Gruppe bestehend aus einem Füllstandmessgerät, einem Grenzstandmessgerät, einem Laufzeitmessgerät und einem Reflexionsmessgerät ist.

12. Verfahren zum Bestimmen einer Abweichung eines Abtastwertes von einem Normal-Wert, aufweisend:
Empfangen von zeitgedehnten Abtastwerten eines Reflexionssignals eines Sendesignals, das periodisch mit einer ersten Periodendauer von einer Sendeeinrichtung (302) ausgesendet wird;
Bereitstellen eines Abschaltsignals außerhalb eines vorgebbaren Messzeitbereichs der zeitgedehnten Abtastwerte eines Reflexionssignals, welches das Aussenden des Sendesignals zumindest zeitweise deaktivieren kann, um einen vorgebbaren Ruhezeitbereich zwischen den zeitgedehnten Abtastwerten des Reflexionssignals zu erzeugen;
Bestimmen eines Wertes eines Amplitudenoffsets (406) der zeitgedehnten Abtastwerte des Reflexionssignals von einem Normal-Wert (403) durch das Auswerten zumindest eines Abtastwertes der zeitgedehnten Abtastwerte, der innerhalb des Ruhezeitbereichs ermittelt wird;
Bereitstellen des Wertes des Amplitudenoffsets (406).

13. Computerlesbares Speichermedium, auf dem ein Programmcode gespeichert ist, der, wenn er auf einem Prozessor ausgeführt wird, den Prozessor anweist, das Verfahren nach Anspruch 12 auszuführen.

14. Computer-Programmprodukt, welches, wenn es auf einem Prozessor ausgeführt wird, den Prozessor anweist, das Verfahren nach Anspruch 12 auszuführen.

## Claims

1. Measuring apparatus (109) having:
a transmit-receive device (102);
an offset determination apparatus (107) for determining an amplitude offset comprising:
a sampling receiver device (204) for receiving time-expanded sampling values (421b, 421 c, 421d, 421e) of a reflection signal (C) of a transmit signal that is periodically sent with a first cycle duration (t1) by a transmitter device (302);
a control device (206) for controlling the transmitter device (302);
an offset provision device (208);
wherein the control device (206) is adapted, outside a predefinable measuring time range (407, I) of the time-expanded sampling values (421b, 421c, 421d, 421e) of a reflection signal (C), to provide a switch-off signal (TX_On) which can deactivate the transmitter device (302) at least intermittently in order to generate a predefinable quiescent time range (408, II) within the time-expanded sampling values (421b, 421 c, 421d, 421e) of the reflection signal (C);
wherein the offset provision device (208) is adapted, by evaluating at least one sampling value (421 b, 421 c, 421d, 421e) of the time-expanded sampling values, which value is determined within the quiescent time range (408, II), to determine a value of an amplitude offset (406) of the time-expanded sampling values (421b, 421c, 421d, 421e) of the reflection signal (C) from a normal value (403) and to supply this value of the amplitude offset (406) at an output (210a, 210b) of the offset provision device (208);
wherein the control device (206) of the offset determination apparatus (107) is connected to the transmit-receive device (102).

2. Measuring apparatus (109) according to claim 1, wherein the time interval of the time-expanded sampling values (421b, 421 c, 421d, 421e) of the reflection signal (C) is a second cycle duration (t2) wherein the second cycle duration (t2) is greater than the first cycle duration (t1).

3. Measuring apparatus (109) according to claim 1 or 2, wherein the duration of the switch-off signal (TX_On) corresponds to an integer multiple of the first cycle duration (t1).

4. Measuring apparatus (109) according to any of claims 1 to 3, wherein the predefinable measuring time range (I, 407) depends on a tank height (h).

5. Measuring apparatus (109) according to any of claims 1 to 4, wherein the value of the amplitude offset (406) of the time-expanded sampling values (421b, 421 c, 421d, 421e) of the reflection signal from the normal value (403) is generated by averaging a plurality of sampling values determined within the quiescent time range in the offset provision device.

6. Measuring apparatus (109) according to any of claims 1 to 5, the offset determination apparatus (107) further comprising:
a selector device (205);
wherein the selector device (205) is adapted to supply a time-expanded sampling value (421b, 421c, 421d, 421e), which occurs within the measuring time range (I, 407), at a first output (207a) of the selector device and to supply at least one sampling value, which is determined within the quiescent time range (II, 408), via a second output (207b) of the selector device to the offset provision device (208).

7. Measuring apparatus (109) according to any of claims 1 to 6, wherein the offset provision device (208) is adapted to use the value of the deviation of the time-expanded sampling values of the reflection signal from a normal value for an amplitude offset correction of the reflection signal (B) prior to a digitisation of the reflection signal and/or to use it for an amplitude offset correction of the reflection signal (C) after a digitisation of the reflection signal.

8. Measuring apparatus (109) according to any of claims 1 to 7, the offset determination apparatus (107) further comprising:
an offset correction device (209);
wherein the offset correction device (209) is adapted to provide the time-expanded sampling values (421 b, 421 c, 421d, 421 e) of the reflection signal corrected by the value of the deviation.

9. Measuring apparatus (109) according to any of claims 1 to 8, the offset determination apparatus (107) further comprising:
a deactivation device (214);
wherein the deactivation device (214) is adapted to transmit the switch-off signal (TX On) at any point in time, for example even within the measuring time range (407, I).

10. Measuring apparatus (109) according to any of claims 1 to 9, wherein the time-expanded sampling values (421 b, 421 c, 421 d, 421e) of the reflection signal are generated by sequential sampling and/or by digitising.

11. Measuring apparatus (109) according to any of claims 1 to 10, wherein the measuring apparatus is at least a measuring apparatus selected from the group consisting of a level measuring instrument, a limit level measuring instrument, a time domain reflectometer and a reflection measuring instrument.

12. Method for determining a deviation of a sampling value from a normal value, comprising:
receiving of time-expanded sampling values of a reflection signal of a transmit signal that is periodically sent with a first cycle duration by a transmitter device (302);
providing of a switch-off signal outside a predefinable measuring time range of the time-expanded sampling values of a reflection signal which can deactivate emission of the transmit signal at least intermittently in order to generate a predefinable quiescent time range between the time-expanded sampling values of the reflection signal;
determining of a value of an amplitude offset (406) of the time-expanded sampling values of the reflection signal from a normal value (403) by evaluating at least one sampling value of the time-expanded sampling values, which sampling value is determined within the quiescent time range;
providing of the value of the amplitude offset (406).

13. Computer-readable storage medium on which a program code is stored which, if it is executed on a processor, instructs the processor to execute the method according to claim 12.

14. Computer program product which, if it is executed on a processor, instructs the processor to execute the method according to claim 12.

## Revendications

1. Dispositif de mesure (109) comprenant :
un dispositif d'émission - réception (102) ;
un dispositif de détermination offset (107) pour la détermination d'un décalage d'amplitude présentant :
un dispositif de réception à balayage (204) pour la réception de valeurs de balayage prolongées dans le temps (421b, 421c, 421d, 421e) d'un signal de réflexion (C) d'un signal d'émission, émis périodiquement par un dispositif d'émission (302) avec une première période (t1) ;
un dispositif de contrôle (206) du dispositif d'émission (302) ;
un dispositif de préparation offset (208) ;
le dispositif de contrôle (206) étant conçu pour fournir un signal de coupure (TX_on) à l'extérieur d'une plage de durée de mesure (407,1) prédéfinissable des valeurs de balayage prolongées dans le temps (421b, 421c, 421d, 421e) d'un signal de réflexion (C), lequel signal de coupure peut désactiver au moins temporairement le dispositif d'émission (302), pour générer une plage de temps de repos (408,II) prédéfinissable à l'intérieur des valeurs de balayage prolongées dans le temps (421b, 421c, 421d, 421e) du signal de réflexion (C) ;
le dispositif de préparation offset (208) étant conçu pour définir, par l'évaluation d'au moins une valeur de balayage (421b, 421c, 421d, 421e) des valeurs prolongées dans le temps, déterminée à l'intérieur de la plage de temps de repos (408,II), une valeur d'un décalage d'amplitude (406) des valeurs de balayage prolongées dans le temps (421b, 421c, 421d, 421e) du signal de réflexion (C) par rapport à une valeur normale, et pour fournir cette valeur du décalage d'amplitude (406) à une sortie (210a, 210b) du dispositif de préparation offset (208) ; le dispositif de contrôle (206) du dispositif de détermination offset (107) étant relié au dispositif d'émission - réception (102).

2. Le dispositif de mesure (109) selon la revendication 1, l'écart dans le temps des valeurs de balayage prolongées dans le temps (421b, 421c, 421d, 421e) du signal de réflexion (C) étant alors égal à une seconde période (t2), la seconde période (t2) étant plus grande que la première période (t1).

3. Le dispositif de mesure (109) selon l'une des revendications 1 et 2, la durée du signal de coupure (TX_on) correspondant à un multiple entier de la première période (t1).

4. Le dispositif de mesure (109) selon l'une des revendications 1 à 3, la plage de durée de mesure (I, 407) prédéfinissable dépendant d'une hauteur (h) du récipient.

5. Le dispositif de mesure (109) selon l'une des revendications 1 à 4, la valeur du décalage d'amplitude (406) des valeurs de balayage prolongées dans le temps (421b, 421c, 421d, 421e) du signal de réflexion par rapport à la valeur normale (403) étant formée d'une moyenne d'une multiplicité de valeurs de balayage, déterminées à l'intérieur de la plage de temps de repos, dans le dispositif de préparation offset.

6. Le dispositif de mesure (109) selon l'une des revendications 1 à 5, le dispositif de détermination offset (107) présentant en outre :
un dispositif de sélection (205) ;
le dispositif de sélection (205) étant conçu pour fournir une valeur de balayage prolongée dans le temps (421b, 421c, 421d, 421e), produite à l'intérieur de la plage de durée de mesure (I, 407), à une première sortie (207a) du dispositif de sélection, et pour fournir au moins une valeur de balayage, déterminée à l'intérieur de la plage de temps de repos (II, 408), à travers une seconde sortie (207b) du dispositif de sélection au dispositif de préparation offset (208).

7. Le dispositif de mesure (109) selon l'une des revendications 1 à 6, le dispositif de préparation offset (208) étant conçu pour utiliser la valeur de l'écart des valeurs de balayage prolongées dans le temps du signal de réflexion par rapport à une valeur normale, pour une correction du décalage d'amplitude du signal de réflexion (B) avant une numérisation du signal de réflexion, et/ou pour utiliser une correction du décalage d'amplitude du signal de réflexion (C) après une numérisation de ce dernier.

8. Le dispositif de mesure (109) selon l'une des revendications 1 à 7, le dispositif de détermination offset (107) présentant en outre :
un dispositif de correction offset (209) ;
le dispositif de correction offset (209) étant conçu pour fournir les valeurs de balayage prolongées dans le temps (421b, 421c, 421d, 421e) du signal de réflexion corrigées de la valeur de l'écart.

9. Le dispositif de mesure (109) selon l'une des revendications 1 à 8, le dispositif de détermination offset (107) présentant en outre :
un dispositif de désactivation (214) ;
le dispositif de désactivation (214) étant conçu pour émettre à un instant quelconque le signal de coupure (TX_on), par exemple également à l'intérieur de la plage de la durée de mesure (407,1).

10. Le dispositif de mesure (109) selon l'une des revendications 1 à 9, les valeurs de balayage prolongées dans le temps (421b, 421c, 421d, 421e) du signal de réflexion étant générées par balayage séquentiel et/ou par numérisation.

11. Le dispositif de mesure (109) selon l'une des revendications 1 à 10, le dispositif de mesure étant au moins un dispositif de mesure sélectionné parmi le groupe constitué d'un appareil de mesure de niveau, d'un appareil de mesure d'état limite, d'un appareil de mesure de durée de propagation et d'un appareil de mesure par réflexion.

12. Procédé de détermination d'un écart entre une valeur de balayage et une valeur normale, comprenant :
la réception de valeurs de balayage prolongées dans le temps d'un signal de réflexion d'un signal d'émission, émis périodiquement par un dispositif d'émission (302) avec une première période ;
la préparation d'un signal de coupure à l'extérieur d'une plage de durée de mesure prédéfinissable des valeurs de balayage prolongées dans le temps d'un signal de réflexion, lequel signal peut désactiver au moins temporairement l'émission du signal d'émission, pour générer une plage de temps de repos prédéfinissable entre les valeurs de balayage prolongées dans le temps du signal de réflexion ;
la détermination d'une valeur d'un décalage d'amplitude (406) des valeurs de balayage prolongées dans le temps du signal de réflexion par rapport à une valeur normale (403) par l'évaluation d'au moins une valeur de balayage des valeurs de balayage prolongées dans le temps, déterminée à l'intérieur de la plage de temps de repos ;
la préparation de la valeur du décalage d'amplitude (406).

13. Support de données lisible par ordinateur, sur lequel est mémorisé un code de programmation qui, lorsqu'il est réalisé sur un processeur, donne l'ordre à ce dernier de mettre en oeuvre le procédé selon la revendication 12.

14. Produit programme d'ordinateur qui, lorsqu'il est réalisé sur un processeur, donne l'ordre à ce dernier de mettre en oeuvre le procédé selon la revendication 12.
